# EUROPÄISCHE PATENTSCHRIFT

(11) **EP 3 882 083 B1**
(45) Veröffentlichungstag und Bekanntmachung des Hinweises auf die Patenterteilung: **28.12.2022**
(21) Anmeldenummer: 21151671.1
(22) Anmeldetag: 14.01.2021
(51) Int. Cl.: B60R 9/042

(54) **ABSENKBARE TRANSPORTGUTHALTEVORRICHTUNG, MONTAGESATZ UND -VERFAHREN**
LOWERABLE GOODS HOLDING DEVICE, ASSEMBLY KIT AND METHOD
DISPOSITIF ABAISSABLE DE SUPPORT POUR MARCHANDISES À TRANSPORTER, ENSEMBLE ET PROCÉDÉ DE MONTAGE

(30) Priorität: 17.01.2020 AT 600142020
(43) Veröffentlichungstag der Anmeldung: 22.09.2021
(73) Patentinhaber: Moser, Michael, 6210 Wiesing (AT)
(72) Erfinder: Moser, Michael, 6210 Wiesing (AT)
(74) Vertreter: HGF

(56) Entgegenhaltungen:
- FR-A1- 2 659 918
- FR-A2- 2 665 401

## Beschreibung

Die Erfindung betrifft eine absenkbare Transportguthaltevorrichtung zur Aufnahme eines insbesondere langgestreckten Transportguts außen an einem Fahrzeug. Die Erfindung betrifft auch einen Montagesatz sowie ein Verfahren zur Montage eines Haltemoduls einer Transportguthaltevorrichtung.

Zum Transport von langgestrecktem Transportgut (Langgut), das im Innenraum des Fahrzeugs nicht oder schlecht transportierbar ist, wie etwa Stangen, Rohe, Profile, Leitern oder dergleichen, sind Langguthalter bekannt, die außen an einem Kraftfahrzeug befestigt oder vorgesehen sind. Ein Gepäckträger, der am Dach des Fahrzeugs angebracht ist, kann als Langguthalter dienen, ist aber oft, insbesondere bei hohen Lieferfahrzeugen wie etwa Kastenwagen, schwer erreichbar oder handhabbar.

Aus US 8,033,777 B2 ist eine Langguthaltevorrichtung mit einer Langgutaufnahme in Form eines sich seitlich eines Fahrzeugs entlang einer Fahrzeuglängsrichtung erstreckenden U-Profils, das an einer Unterseite des Fahrzeugs über zwei Parallelgelenke angelenkt und mit hydraulischer Unterstützung in eine Ladeposition absenkbar und in eine Transportposition anhebbar ist. Diese Lösung ist für Pritschenwagen mit einem Zwischenraum zwischen Fahrerkabine und Pritsche geeignet, da der vordere Hebemechanismus in diesem Zwischenraum untergebracht werden kann, während der hintere Hebemechanismus hinter der Pritsche angeordnet ist. Die Lösung eignet sich jedoch nicht für Lieferwagen mit geschlossener Seitenwand, da die Hebemechanismen dann seitlich außerhalb der Seitenwand angebracht sein müsste, was ein hohes Risiko für andere Verkehrsteilnehmern darstellen würde. Zudem erfordert diese Lösung eine hydraulische Hubvorrichtung, die oft nicht zur Verfügung steht.

Aus FR 2 659 918 B1 ist eine Langguthaltevorrichtung zur Anbringung an einer Dachseite eines Fahrzeugs bekannt. An einem über das Dach reichenden Gestell sind je Seite drei im Wesentlichen vertikale, geringfügig zum Fahrzeug hin geneigte Schwenkholme jeweils über ein Parallelgelenk schwenkbar angelenkt. An jedem Schwenkholm sind Aufnahme- und Befestigungsmittel wie etwa Winkel, Bügel, Auflagen, Niederhalter, Schlaufen oder dergleichen, über die Länge des Schwenkholms angeordnet. Die Schwenkholme sind über Längsstreben miteinander zu einem Schwenkrahmen verbunden, der über die Parallelgelenke in eine Ladeposition absenkbar und in eine Transportposition anhebbar ist. In der Ladeposition schlägt eine der Gelenkstangen des Parallelgelenks an einem Bolzen am Schwenkholm an, um die Transportposition zu halten. Durch Sicherungsmittel wie etwa einen Rasthaken ist der Schwenkrahmen in der Transportposition sicherbar. Allerdings ist diese Sicherung in der Transportposition zwingend, da die Gelenkstangen stets vom Fahrzeug weg weisen. Die Last muss also aktiv in der Transportposition gehalten werden, um die Sicherungsmittel einzuhaken. Wenn dies nicht gelingt, ist es schwer, die Last zu stabilisieren. Dies ist nachteilig im Hinblick auf die Ergonomie und Betriebssicherheit. Ferner ist hier problematisch, dass die Aufnahme- und Befestigungsmittel auch bei Nichtbenutzung von dem Fahrzeug abstehen. Dies vergrößert die Breite des Fahrzeug über alles, kann das optische Erscheinungsbild stören, kann die Handhabung beim Ausschwenken behindern und kann auch ein Sicherheitsrisiko darstellen. Des Weiteren macht diese Lösung Gebrauch von einem durch Holme und Streben aufgebauten Rahmen, der im Ganzen über mehrere Gelenke schwenkbar ist, und einem daran angepassten Gestell. Dadurch ist die Vorrichtung auf eine bestimmte Länge und im Wesentlichen auf einen oder wenige Fahrzeugtypen festgelegt und kann an einem kürzeren Fahrzeug oder für kürzere Güter zu lang oder für längere Güter zu kurz sein. Zur Anpassung an andere Fahrzeugtypen müsste das gesamte Gestell geändert werden.

Die FR 2 665 401 A2 offenbart eine absenkbare Transportguthaltevorrichtung nach dem Oberbegriff von Anspruch 1, und ist eine Zusatzanmeldung zu dem zuvor diskutierten Patent, wobei dessen Prinzip durch eine Federunterstützung der Schwenkbewegung durch eine Schraubenzugfeder weiterentwickelt ist. Ferner sind die Sicherungsmittel dahin weiterentwickelt, dass sie auch zur Sicherung der Ladeposition geeignet sind. Hierzu ist eine am Holm drehbar gelagerte, hakenartige Verriegelungslasche vorgesehen, die in der Transportposition über einem Bolzen am Gestell und in der Ladeposition an einer der Gelenkstangen einhakbar ist, wodurch der Schwenkrahmen in einem vorbestimmte Schwenkwinkel des Parallelgelenks gehalten wird. Die Federunterstützung ist im Wesentlichen eine Anhebehilfe aus der Ladeposition. Auch kann eine unkontrollierte Ausschwenkbewegung zumindest abgefangen werden. Allerdings ist die Unterstützungswirkung im oberen Bewegungsbereich gering oder gar verschwindend. Daher besteht nach wie vor die Möglichkeit eines Verlusts der Kontrolle über die Last bei Versagen des Einhakens in der Transportposition, mit damit verbundenen Unfallgefahren. Die weiteren oben angesprochenen Probleme bleiben bestehen.

Eine Aufgabe der vorliegenden Erfindung besteht somit darin, die Nachteile im Stand der Technik beim Transportieren eines Langguts an einem Fahrzeug zu vermeiden oder zu mindern und insbesondere im Hinblick auf Betriebssicherheit, Ergonomie, manuelle Bedienbarkeit, Funktionalität, Versatilität und optisches Erscheinungsbild Verbesserungen bereitzustellen.

Die Aufgabe wird wenigstens in Teilaspekten mit einer Transportguthaltevorrichtung mit den Merkmalen der unabhängigen Ansprüche gelöst.

Vorteilhafte Weiterbildungen sind in den hiervon abhängigen Unteransprüchen angegeben.

In allen Abschnitten dieser Beschreibung beziehen sich Angaben wie "oben", "unten", "Vertikale", "Anstieg" und "absinken" auf eine Lage der Transportguthaltevorrichtung im Raum, die einem montierten Zustand am Fahrzeug entspricht, sofern nicht ausdrücklich anders angegeben oder offensichtlich anders gemeint. Die Angaben "längs", "quer", "breit" und "seitlich" beziehen sich auf lokale Eigenschaften eines beschriebenen Bauteils. Dabei ist "längs" im Zweifel eine Richtung einer größten Bauteildimension oder die Richtung einer primären Symmetrieachse, "quer" im Zweifel eine Richtung einer zweitgrößten Bauteildimension oder die Richtung einer sekundären Symmetrieachse. Vorstehendes Verständnis ist stets anzunehmen, sofern nicht ausdrücklich etwas anders angegeben oder aus dem Zusammenhang offensichtlich etwas anders gemeint ist.

Die Erfindung betrifft eine absenkbare Transportguthaltevorrichtung für ein Fahrzeug, wobei die Transportguthaltevorrichtung wenigstens ein Haltemodul aufweist, wobei das Haltemodul eine Transportgutaufnahmeeinheit mit Aufnahme- und/oder Befestigungsmitteln für ein Transportgut, eine Trägereinheit, die an einem Fahrzeug angebracht oder anbringbar ist, und eine Parallelgelenkeinheit mit parallelen Parallellenkern, die an einem Tragholm der Trägereinheit in festen Lenkerlagern und an einem Schwenkholm der Transportgutaufnahmeeinheit in freien Lenkerlagern parallel zueinander derart drehbar gelagert sind, dass die Transportgutaufnahmeeinheit gegenüber der Trägereinheit zwischen einer Einschwenkstellung und einer Ausschwenkstellung schwenkbar ist, aufweist. Das Begriffspaar "frei" und "fest" bezieht sich dabei auf eine Beweglichkeit bzw. Nichtbeweglichkeit bezüglich des Tragholms. Bei der Montage kann das Modul im Bereich einer Seitenwand oder Rückwand eines Fahrzeugs so an dem Fahrzeug montiert werden, dass eine Schwenkebene, in der ein beliebiger Punkt der Transportgutaufnahmeeinheit mittels der Parallelgelenkeinheit schwenkt, eine vertikale Ebene ist, die Einschwenkstellung eine obere Endstellung und die Ausschwenkstellung eine untere Endstellung der Schwenkbewegung der Transportgutaufnahmeeinheit ist. Die Montage kann so erfolgen, dass die Transportgutaufnahmeeinheit in der oberen Endstellung oberhalb einer horizontalen Ebene, die von einem höchsten Punkt von Türen des Fahrzeugs bestimmt ist, und in der unteren Endstellung unterhalb der vorgenannten horizontalen Ebene und insbesondere in einer Höhe derart, dass sie von einer Person in bequemer Haltung zum Beladen und Entladen erreichbar ist, angeordnet ist. Dies ermöglicht auch die bequeme Be- und Entladung in Greifhöhe und den Transport in etwa in Dachhöhe auch an einem hohen Transportfahrzeug, wobei die Türen des Fahrzeugs frei beweglich sind, wenn sich die Transportgutaufnahmeeinheit in der oberen Endstellung befindet. Durch die Parallelgelenkanlenkung ändert sich die Winkellage der Transportgutaufnahmeeinheit über den Schwenkbereich grundsätzlich nicht, allerdings können sich in der Praxis aufgrund von Lagerspiel und/oder elastischen Effekten geringfügige Abweichungen von der Parallelität der Parallellenker und/oder Holmen einstellen. Solche Abweichungen können auch ausgenutzt werden, um in den jeweiligen End- und/oder Zwischenlagen eine günstige Ausrichtung der Transportgutaufnahmeeinheit zu erreichen. Die Montage kann insbesondere so erfolgen, dass der Tragholm wenigstens in Teilen im Bereich oberhalb der Türen des Fahrzeugs angeschlagen ist.

Eine Transportguthaltevorrichtung zeichnet sich dadurch aus, dass die Trägereinheit zur seitlichen Anbringung am Fahrzeug ausgebildet ist und die Transportgutaufnahmeeinheit einen Klapparm aufweist, der an dem Schwenkholm derart gelagert ist, dass der Klapparm zwischen einer Einklappstellung, in welcher sich der Klapparm parallel oder im Wesentlichen parallel zu dem Schwenkholm erstreckt, und einer Ausklappstellung, in welcher der Klapparm zur Aufnahme des Transportguts rechtwinklig oder im Wesentlichen rechtwinklig von dem Schwenkholm abragt, bewegbar ist. Bei ausgeklapptem Klapparm kann das Transportgut auf dem Schwenkholm abgelegt und gegebenenfalls befestigt werden. Durch den aus- und einklappbaren Klapparm kann die Auskragung der Transportguthaltevorrichtung bei Nichtgebrauch und somit die Breite über alles eines Fahrzeugs, an dem die Transportguthaltevorrichtung montiert ist, beträchtlich verringert werden. Dies kann sowohl das Erscheinungsbild als auch die Betriebssicherheit beträchtlich verbessern.

Vorzugsweise ist der Klapparm so ausgebildet, dass der Klapparm in der Einklappstellung den Schwenkholm, die Trägereinheit und die Parallelgelenkeinheit in Breitenrichtung vollständig und in Längsrichtung wenigstens teilweise verdeckt. Vorzugsweise kann der Klapparm einen wenigstens abschnittweise U-förmigen Querschnitt aufweisen, der eine größere lichte Weite als eine äußere Abmessung über alles des Schwenkholms und des Tragholms mit Parallelgelenkeinheit in Querrichtung aufweist und dessen freie Schwenkel in der Einklappstellung zu dem Tragholm weisen. Der Klapparm kann insbesondere aus einem aus einem U-Profil hergestellt sein. Damit kann einerseits eine stabile Auflage für das Transportgut und andererseits eine wirksame Einhausung für die fahrzeugseitigen Bestandteile des Haltemoduls geschaffen werden.

Vorzugsweise weist der Tragholm einen U-förmigen Querschnitt auf, dessen Basis eine Fahrzeugseite des Tragholms definiert, und dessen freie Schenkel Seitenwände bilden, welche die festen Lenkerlager und das feste Federlager aufnehmen.

Vorzugsweise weist der Schwenkholm zwei Seitenwände auf, die durch Profile oder Bleche gebildet sind und die durch Querverbindungselemente, insbesondere Querriegel, die durch mit den Seitenwänden verschraubte Verbindungsmuffen gebildet sind, miteinander verbunden sind.

Vorzugsweise weisen die Parallellenker Seitenwände auf, die durch Profile oder Bleche gebildet sind, die in den festen Lenkerlagern an den Seitenwänden des Tragholms angebunden sind und die in den freien Lenkerlagern an den Seitenwänden des Schwenkholms angebunden sind.

Vorzugsweise sind Kanten des Klapparms und/oder des Schwenkholms mit einem elastischen oder weichen Schutzelement, beispielsweise einem Kantenschutzprofil, versehen. Damit kann das Transportgut wie auch der Klapparm vor Beschädigungen geschützt werden. Die Begriffe "elastisch" und "weich" sind in diesem Zusammenhang in Relation zum Klapparm selbst zu verstehen.

Vorzugsweise weist der Klapparm Festlegemittel auf, die zum Festlegen eines Transportguts ausgebildet sind. Die Festlegemittel können beispielsweise Schlitze oder Bohrungen oder anders geformte Ausnehmungen in Profilwänden oder Beschläge wie etwa Querriegel, Haken oder Poller (Stehbolzen mit Kopf) umfassen, die zum Durchführen oder Umschlingen oder Einhaken oder Belegen mit einem Zurrmittel wie etwa Gurten, Schüren, elastischen Bändern oder dergleichen ausgebildet sind. Gleichermaßen kann der Schwenkholm derartige Festlegemittel aufweisen. Ein Querriegel kann beispielsweise durch ein zwischen gegenüberliegenden Wandungen des Klapparms bzw. des Schwenkholms angeordnetes Rohrstück mit Innengewinde und stirnseitig über Bohrungen in den Wandungen eingeführte Gewindeschrauben gebildet werden.

Vorzugsweise sind Ausklappsicherungsmittel vorgesehen, die den Klapparm in der Einklappstellung sichern. Solche Ausklappsicherungsmittel können beispielsweise ein Sicherungsfederelement und eine Raste aufweisen, wobei das Sicherungsfederelement in der Einklappstellung an der Raste einrastet und bei Überschreiten einer vorbestimmten Kraft entgegen der Einklapprichtung nachgibt. Das Sicherungsfederelement kann an dem Klapparm befestigt sein, und die Raste kann beispielsweise durch einen Querriegel am Schwenkholm verwirklicht sein, oder umgekehrt.

Vorzugsweise sind Einklappsicherungsmittel vorgesehen, die den Klapparm in der Ausklappstellung sichern. Solche Einklappsicherungsmittel können beispielsweise ein federvorgespanntes Riegelelement und eine Raste aufweisen, wobei das Riegelelement in der Ausklappstellung des Klapparms unter Wirkung der Federvorspannung an der Raste einrastet, um eine Bewegung des Klapparms in Einklapprichtung zu blockieren, und bei manueller Betätigung die Raste freigibt.

Vorzugsweise sind Ausschwenksicherungsmittel vorgesehen, welche die Transportgutaufnahmeeinheit in der Einschwenkstellung sichern. Solche Ausschwenksicherungsmittel können beispielsweise ein federvorgespanntes Riegelelement und eine Raste aufweisen, wobei das Riegelelement in der oberen Endstellung der Transportgutaufnahmeeinheit unter Wirkung der Federvorspannung an der Raste einrastet, um eine Bewegung der Transportgutaufnahmeeinheit in Ausschwenkrichtung zu blockieren, und bei manueller Betätigung die Raste freigibt.

Vorzugsweise kann eine Stützfeder vorgesehen sein, welche sich zwischen einem festen Federlager am Tragholm und einem mitschwenkenden oder freien Federlager am Schwenkholm erstreckt und welches zwischen dem Tragholm und dem Schwenkholm eine Federkraft ausübt, um eine Hubbewegung der Transportgutaufnahmeeinheit zu unterstützen. Die Stützfeder kann eine Gasfeder sein, die drückend wirkt. Alternativ kann die Stützfeder auch eine Schraubenfeder sein, die drückend oder ziehend wirkt. In Ausführungsvarianten kann zur weiteren Verbesserung des Komforts anstelle einer Stützfeder auch ein Hydraulikzylinder mit Hydraulikpumpe vorgesehen sein. Hydraulikzylinder mehrerer Haltemodule können auch zentral angesteuert werden und damit beide Module gleichzeitig nach oben bzw. unten fahren.

Das freie Federlager kann koaxial mit dem unteren freien Lenkerlagers am Schwenkholm angeordnet sein. Das feste Federlager kann unterhalb des unteren festen Lenkerlagers angeordnet am Tragholm angeordnet sein. Somit kann die Stützfeder die Schwenkbewegung gut von unten stützen.

Die Parallellenker können in der Einschwenkstellung von den festen Gelenklagern aus nach oben und zum Fahrzeug hin weisen. Dies bedeutet, dass die Lage der Transportgutaufnahmeeinheit beim Ausschwenken von der Einschwenkstellung aus zunächst einen Anstieg durchläuft, um erst nach Durchlaufen eines höchsten Punkts bis zur Ausschwenkstellung abzusinken. Dies ermöglicht auch eine gewisse Selbststabilisierung der Transportgutaufnahmeeinheit in der Einschwenkstellung selbst bei Versagen einer Stützfeder oder sonstiger Sicherungsmittel und kann daher auch die Betriebssicherheit der Transportguthaltevorrichtung verbessern. Beim Ausschwenken muss in jedem Fall zunächst durch horizontalen Zug der Anstieg zum höchsten Punkt (oberen Totpunkt) überwunden werden, bevor die Transportgutaufnahmeeinheit abgesenkt werden kann.

Dieser Erfindungsgesichtspunkt kann zuverlässig verwirklicht werden, wenn die Parallellenker in der Einklappstellung von den festen Gelenklagern aus nach oben und zu einer Fahrzeugseite des Tragholms hin weisen. Eine Fahrzeugseite des Tragholms ist diejenige Seite, die zur Befestigung an einem Fahrzeug vorgesehen ist. Das heißt, dass die Achsen der freien Lenkerlager beim Einschwenken in die Einschwenkstellung und beim Ausschwenken aus dieser heraus eine durch die Achsen der festen Lenkerlager aufgespannte Ebene (Festlagerachsenebene) durchlaufen. Bei einem vertikal montierten Tragholm kann auch die Festlagerachsenebene vertikal verlaufen und ist im Bewegungsverlauf der obere Totpunkt vorhanden, wenn die Parallellenker in der Einklappstellung von den festen Gelenklagern aus nach oben und zu einer Fahrzeugseite des Tragholms hin weisen. Da die Fahrzeugwände von Fahrzeugen in aller Regel zum Dach hin nach innen geneigt sind und der Tragholm daher allenfalls nach innen, also zum Fahrzeug geneigt montiert wird, wird bei dieser Ausgestaltung das Vorhandensein des oberen Totpunkts in jedem realistischerweise anzunehmenden Fall sichergestellt.

Die zwei Haltemodule können zur gemeinsamen Aufnahme eines langgestreckten Ladeguts vorgesehen sind, die unabhängig voneinander schwenkbar sind. Mit anderen Worten, es gibt keinen fest verbundenen Rahmen, der sich über die Länge des Haltemoduls über zwei oder mehr Schwenkgelenkeinheiten erstreckt, sondern mehrere Haltemodul, die jeweils eine Parallelgelenkeinheit aufweisen, sind einzeln in beliebiger Zahl und mit beliebigem Abstand an einem Fahrzeug anbringbar und betätigbar. Dies schließt aber nicht aus, dass mehrere Haltemodule über ein Transportgut, das an den Haltemodulen jeweils festgelegt ist, gemeinsam geschwenkt werden können.

Vorzugsweise weist jedes Haltemodul eine größere Erstreckung in Hubrichtung auf als in einer Richtung entlang Drehachsen der Parallelgelenkeinheit. Mit anderen Worten, es werden schlanke und gut handhabbare, transportierbare und lagerbare Haltemodule geschaffen.

Ein Montagesatz zur Montage eines vorstehend beschriebenen Haltemoduls kann vorgesehen sein, mit einer Montageplatte, die zur Befestigung des Haltemoduls daran dadurch, dass sie Befestigungsvorbereitungen aufweist, die an Gegenbefestigungsvorbereitungen an dem Haltemodul angepasst sind, ausgebildet ist, und mit Ausrichtmitteln, die an eine Außenfläche einer Außenwand eines Fahrzeugs derart angepasst sind, dass die Montageplatte das Haltemodul in funktional richtiger Lage hält, wenn sie an der Außenfläche der Außenwand des Fahrzeugs anliegt und das Haltemodul daran befestigt ist. Die Befestigungsvorbereitungen und/oder Gegenbefestigungsvorbereitungen können eines oder mehrere der folgenden aufweisen: fluchtende Durchgangsbohrungen oder Bohrungsanordnungen, Einschraubelemente wie etwa Einpressmuttern, Anschraubelemente wie etwa Stehbolzen, Passelemente wie etwa Passbohrungen und -stifte oder dergleichen, Einhakelemente, Sicherungselemente. Die Ausrichtelemente können je nach Fahrzeugtyp verschieden ausgebildet sein. Die Ausrichtelemente können beispielsweise durch Formgebung einer von dem Haltemodul abgewandten Seite der Montageplatte oder der Montageplatte selbst oder durch Einleger, Aufstecker oder dergleichen verwirklicht sein.

Vorzugsweise ist wenigstens ein Gegenhalteelement vorgesehen, das an eine Innenfläche der Außenwand des Fahrzeugs in dem Bereich angepasst ist, in dem die Ausrichtelemente an die Außenfläche angepasst sind, und das Befestigungsvorbereitungen aufweist, die an Gegenbefestigungsvorbereitungen an dem Haltemodul angepasst sind. Die Befestigungsvorbereitungen und/oder Gegenbefestigungsvorbereitungen können eines oder mehrere der folgenden aufweisen: fluchtende Durchgangsbohrungen oder Bohrungsanordnungen, Einschraubelemente wie etwa Einpressmuttern, Anschraubelemente wie etwa Stehbolzen, Passelemente wie etwa Passbohrungen und -stifte oder dergleichen, Einhakelemente, Sicherungselemente.

Vorzugsweise sind Anpassmittel vorgesehen, die zur Anpassung an die Innenfläche der Außenwand des Fahrzeugs vorbereitet sind. Die Anpassmittel können eines oder mehrere der folgenden aufweisen: Biegeerleichterungen wie etwa Perforationen, Sollbruchstellen.

Ein Verfahren zum Montieren eines vorstehend beschriebenen Haltemoduls kann folgende Schritte aufweisen:
Anbringen einer Montageplatte an einer Außenfläche einer Außenwand eines Fahrzeugs, und
Anbringen des Haltemoduls an der Montageplatte.

Vorzugsweise werden vor dem Anbringen der Montageplatte Befestigungselemente, die von der Montageplatte abragen, an der Montageplatte angeordnet, und umfasst das Anbringen des Haltemoduls ein Ansetzen des Haltemoduls an die Montageplatte derart, dass die Befestigungselemente mit Gegenbefestigungselementen am Haltemodul zusammenwirken. Vorzugsweise sind die Befestigungselemente Anschraubelemente wie etwa Schrauben oder Stehbolzen, sind die Gegenbefestigungselemente Durchgangsbohrungen, und umfasst das Anbringen ein Verschrauben des Haltemoduls mit den Anschraubelementen.

Vorzugsweise umfasst das Anbringen der Montageplatte ein Fixieren der Montageplatte an der Außenfläche, insbesondere durch Blechschrauben, magnetische Wirkung oder Klebstoff, ein Herstellen Bohrungen oder Durchbrüchen an der Außenwand des Fahrzeugs vor oder nach dem Fixieren, und ein Befestigen der Montageplatte an wenigstens einem Gegenhalteelements, das/die an einer Innenfläche der Außenwand angeordnet wird/werden, über die Bohrungen oder Durchbrüche. An der Verbindungsstelle zwischen Montageplatte und Fahrzeugblechaußenseite entstehen hohe Kräfte (insbesondere in Fahrzeuglängsrichtung) beim Bremsen und Beschleunigen. Durch eine große Klebefläche werden die Kräfte (Scherkraft) optimal ins Fahrzeug abgearbeitet.

Obschon jeder Erfindungsgesichtspunkt einzeln beansprucht wird, können einzelne Merkmale aller Erfindungsgesichtspunkte und ihrer Ausführungsformen und -varianten miteinander kombiniert werden, um weitere Gesichtspunkte und/oder Ausführungsformen zu bilden.

Die Erfindung wird nachstehend anhand eines Ausführungsbeispiels unter Bezugnahme auf die beigefügten Zeichnungen erläutert. Dabei werden weitere Aufgaben, Merkmale und Vorteil der Erfindung ersichtlich werden. Es zeigen:
- Figur 1: ein Fahrzeug (nur teilweise) mit einer Langgutaufnahmevorrichtung nach einem Ausführungsbeispiel der vorliegenden Erfindung in einer Ladestellung in einer perspektivischen Ansicht;
- Figur 2: ein Fahrzeug (nur teilweise) mit einem Haltemodul der Langgutaufnahmevorrichtung von Fig. 1 in der Ladestellung in einer anderen perspektivischen Ansicht;
- Figur 3: ein Fahrzeug (nur teilweise) mit einem Haltemodul der Langgutaufnahmevorrichtung von Fig. 1 in der Ladestellung in einer noch anderen perspektivischen Ansicht;
- Figur 4: ein Fahrzeug (nur teilweise) mit einem Haltemodul der Langgutaufnahmevorrichtung von Fig. 1 in einer Transportstellung in einer anderen perspektivischen Ansicht;
- Figur 5: ein Fahrzeug (nur teilweise) mit einer Langgutaufnahmevorrichtung nach einem Ausführungsbeispiel der vorliegenden Erfindung in einer ersten Zwischenstellung in einer perspektivischen Ansicht;
- Figur 6: ein Haltemodul der Langgutaufnahmevorrichtung von Fig. 1 in einer Schließstellung in einer Draufsicht;
- Figur 7: das Haltemodul gemäß Fig. 6 in einer Seitenansicht;
- Figur 8: eine Transportgutaufnahmeeinheit in dem Haltemodul gemäß Fig. 7;
- Figur 9: die Transportgutaufnahmeeinheit gemäß Fig. 8 in einer Teilöffnungsstellung;
- Figur 10: das Haltemodul von Fig. 6 in einer Transportstellung in einer Draufsicht;
- Figur 11: das Haltemodul gemäß Fig. 10 in einer Seitenansicht;
- Figur 12: die Transportgutaufnahmeeinheit des Haltemoduls gemäß Fig. 11 in einer Öffnungsstellung in einer Seitenansicht mit einer vergrößerten Einzelheit;
- Figur 13: das Haltemodul gemäß Fig. 7 oder 11 in einer ersten Zwischenstellung;
- Figur 14: das Haltemodul gemäß Fig. 7, 11 oder 13 in einer zweiten Zwischenstellung;
- Figur 15: das Haltemodul gemäß Fig. 7, 11, 13 oder 14 in einer Ladestellung;
- Figur 16: Teile eines Montagesatzes für zwei Haltemodule in der Transportguthaltevorrichtung von Fig. 1;
- Figur 17: eine Anordnung der Teile des Montagesatzes relativ zueinander in einer Montagesituation;
- Figur 18: eine Querschnittsansicht eines Kantenschutzprofils an dem erfindungsgemäßen Haltemodul;
- Figur 19: das Haltemodul mit Verlängerungsstücken nach einem Ausführungsbeispiel der vorliegenden Erfindung in einer Seitenansicht gemäß Figur 11;
- Figur 20: eine Einzelheit im Bereich eines festen Federlagers im Axialschnitt;
- Figur 21: eine Einzelheit im Bereich eines unteren festen Lenkerlagers der Parallelgelenkeinheit im Axialschnitt;
- Figur 22: eine Einzelheit im Bereich einer Achsaufnahme des Klapparms und eines Öffnungsanschlags im Axialschnitt;
- Figur 23: eine Einzelheit im Bereich eines oberen festen Lenkerlagers der Parallelgelenkeinheit im Axialschnitt;
- Figur 24: eine Einzelheit im Bereich eines Querriegels des Schwenkholms einer ersten Variante im Axialschnitt;
- Figur 25: eine Einzelheit im Bereich eines freien Federlagers und unteren freien Lenkerlagers der Parallelgelenkeinheit im Axialschnitt;
- Figur 26: eine Einzelheit im Bereich eines Querriegels des Schwenkholms einer zweiten Variante im Axialschnitt;
- Figur 27: eine Einzelheit im Bereich eines oberen mitlaufenden oder freien Lenkerlagers der Parallelgelenkeinheit im Axialschnitt;
- Figur 28: ein Fahrzeug (nur teilweise) mit einer Langgutaufnahmevorrichtung mit einem Greifbügel nach einem Ausführungsbeispiel der vorliegenden Erfindung in einer Ladestellung in einer perspektivischen Ansicht;
- Figur 29: das Haltemodul gemäß Fig. 7 oder 11 in einer ersten Zwischenstellung mit einem erfindungsgemäßen Greifbügel.

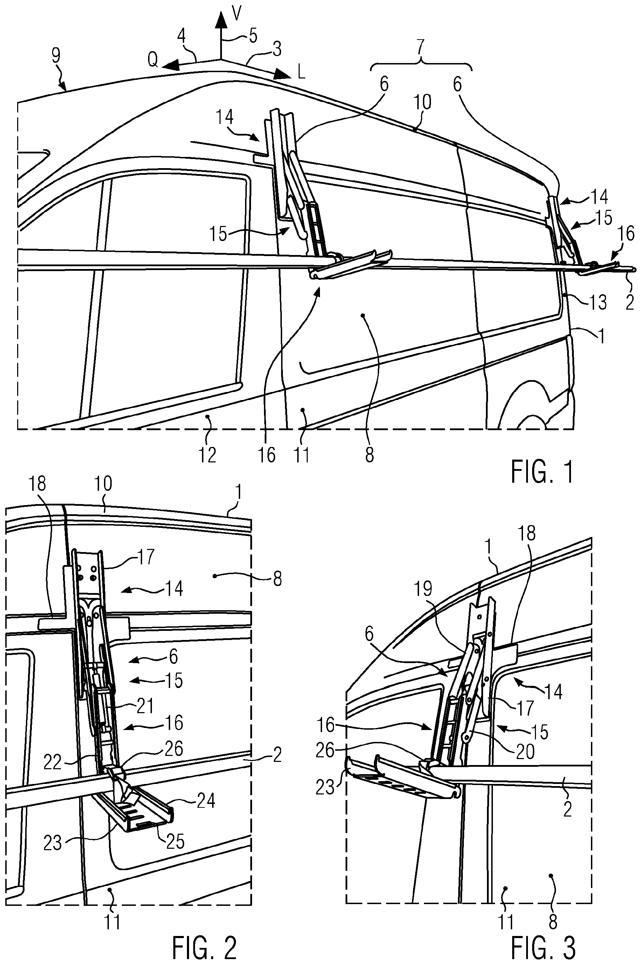

Die Erfindung wird nachstehend anhand eines Ausführungsbeispiels beschrieben werden, bei welchem ein Fahrzeug 1 zum Transport eines Transportguts 2 ausgestattet ist (Figuren 1 bis 5). An dem Fahrzeug 1 sind eine Fahrzeuglängsrichtung (L) 3 und eine dazu rechtwinklig verlaufende Fahrzeugquerrichtung (Q) 4, die beide rechtwinklig zu einer vertikalen Richtung (V) 5 verlaufen, in der für die Fahrzeug dynamisch üblichen Weise definiert, um ein fahrzeuggebundenes kartesisches Koordinatensystem zu bilden.

Zum Transport des Transportguts 2 sind zwei Haltemodule 6 an dem Fahrzeug angebracht, um eine Transportguthaltevorrichtung 7 im Sinne der Erfindung zu bilden. Die Haltemodule 6 sind dabei an einer Seitenwand 8 des Fahrzeugs 1 angebracht, die unterhalb des Fahrzeugdachs 9 im Anschluss an eine Dachkante 10 verläuft. Ein erstes der Haltemodule 6 ist an einer B-Säule 11 des Fahrzeugs 1, die hinter einer Fahrzeugtür 12, genauer gesagt, einer vorderen Fahrzeugtür 12 verläuft, angebracht, während ein zweites der Haltemodule 6 im Bereich einer Endsäule (C- oder D-Säule) 13 des Fahrzeugs 1 angebracht ist. Jedes Haltemodul 6 weist eine Trägereinheit 14, eine Parallelgelenkeinheit 15 und eine Transportgutaufnahmeeinheit 16 auf, die nachstehend genauer beschrieben werden.

Die Trägereinheit 14 weist als wesentliche konstruktive Struktur einen Tragholm 17 auf. Der Tragholm 17 kann einen U-förmigen Querschnitt aufweisen, dessen Basis zur Fahrzeugseitenwand 8 weist. Der Tragholm 17 kann mit Hilfe eines Montagesatzes 18 am Fahrzeug 1 angebracht sein, wie später noch im Einzelnen beschrieben werden wird (Figuren 2, 3). Im vorliegenden Ausführungsbeispiel erfolgt die Befestigung am Fahrzeug 1 ausschließlich im Bereich der Seitenwand 8, dies ist jedoch ebenfalls nicht als Einschränkung des Erfindungsumfangs zu verstehen. Die Befestigung kann auch im Bereich eines Hecks erfolgen, sofern dort oberhalb einer Hecktür ausreichend Bauhöhe vorhanden ist. Die Befestigung kann in Ausführungsvarianten auch über die Dachkante 10 und bis auf das Fahrzeugdach 9 reichen und kann beispielsweise auch in eine Nut oder Reling im Bereich der Dachkante 10 greifen.

Die Parallelgelenkeinheit 15 weist einen oberen Parallellenker 19 und einen unteren Parallellenker 20 auf, die mit jeweiligen ersten Enden in einigem Abstand voneinander an dem Tragholm 17 der Trägereinheit 14 drehbar gelagert sind (Figuren 3, 2). Die Parallelgelenkeinheit 15 kann ferner eine Stützfeder 21 aufweisen, die ebenfalls drehbar an dem Tragholm 17 gelagert ist. Die Transportgutaufnahmeeinheit 16 kann einen Schwenkholm 22 aufweisen, an welchem die jeweils zweiten, freien Enden der Parallellenker 19, 20 der Parallelgelenkeinheit 15 in gleichem Abstand wie an dem Tragholm 17 drehbar gelagert sind. Der Schwenkholm 22 kann somit parallel zu dem Tragholm 17 zwischen einer oberen Endlage und einer unteren Endlage, die durch jeweilige Anlagepunkte definiert sind, schwenken. Die obere Endlage wird nachstehend auch als Einschwenkstellung, die untere Endlage als Ausschwenkstellung bezeichnet. Ein zweites, freies Ende der Stützfeder 21 kann ebenfalls an dem Schwenkholm 22 der Transportgutaufnahmeeinheit 16 drehbar gelagert sein. Die Stützfeder 21 kann damit die Schwenkbewegung des Schwenkholms 22 gegenüber dem Tragholm 17 je nach Schwenkstellung und Schwenkrichtung unterstützen oder hemmen.

Die Transportgutaufnahmeeinheit 16 kann einen Klapparm 23 aufweisen, der an dem Schwenkholm 22 drehbar zwischen einer Einklappstellung und einer Ausklappstellung gelagert ist. Der Klapparm 23 kann in der Ausklappstellung eine Auflage für das Transportgut 2 bilden (Figuren 1 bis 5). Der Klapparm 23 kann einen U-förmigen Querschnitt aufweisen, dessen Kanten in der Ausklappstellung nach oben weisen. Die nach oben weisenden Kanten können mit einem Kantenschutzprofil 24 versehen sein, um einerseits den Klapparm 23 und/oder das Transportgut 2 vor Beschädigungen zu schützen (Figur 2). Der Klapparm 23 kann mehrere Schlitze 25 als Belegungsmittel aufweisen, wobei die Schlitze 25 ausgebildet sind, um ein Zurrmittel 26, wie etwa einem Gurt, aufzunehmen, um das Transportgut 2 damit zu verzurren (Figur 2, 3). Der U-förmige Querschnitt des Klapparms 23 kann eine größere lichte Weite als Breite über alles des Tragholms 17 der Trägereinheit 14 einschließlich daran ggf. seitlich abragender Elemente aufweisen kann. Daher kann der Klapparm 23 in einer Einklappstellung den Tragholm 17 und daran angebrachte Auflage abdecken.

Ein Zustand, in welcher die Transportgutaufnahmeeinheit 16 vollständig ausgeschwenkt ist und der Klapparm 23 vollständig ausgeklappt ist, ist eine Ladestellung des Haltemoduls 6 (Figuren 1 bis 3). In dieser Stellung befindet sich die Transportgutaufnahmeeinheit 16, insbesondere der Klapparm 23, in einer Höhe (Ladehöhe), in der ein Be- und Entladen durch eine stehende Person vom Boden aus bequem möglich ist. Die Ladehöhe kann beispielsweise von etwa Bauchhöhe bis etwa über Kopfhöhe, idealerweise von etwa Schulterhöhe bis etwa Kopfhöhe, was auf ein ausgewähltes Perzentil von im Transport- und/oder Bauwesen tätigen Personen bezogen sein kann.

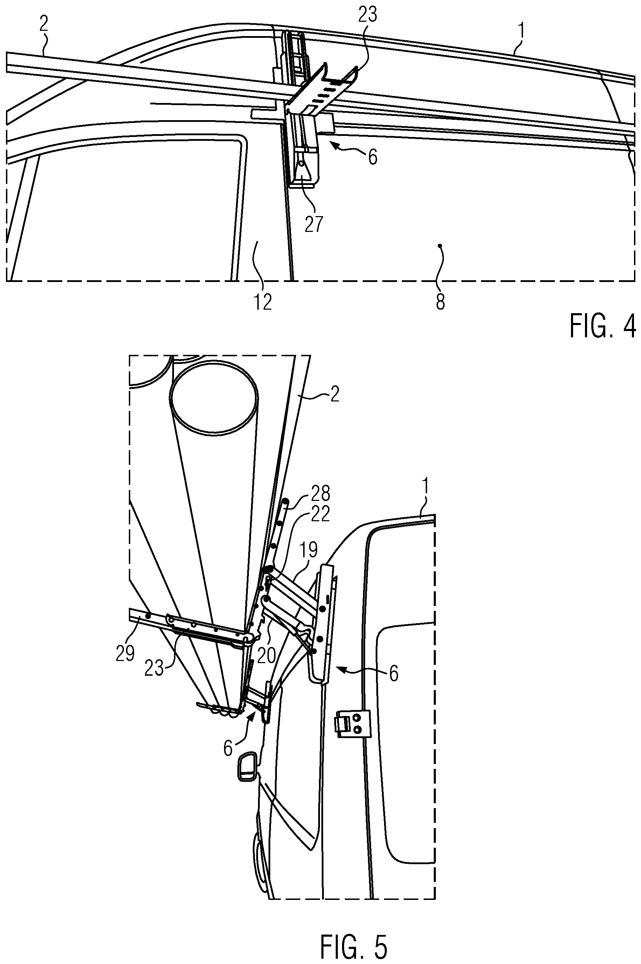

Ein Zustand, in welcher die Transportgutaufnahmeeinheit 16 vollständig eingeschwenkt ist und der Klapparm 23 vollständig ausgeklappt ist, ist eine Transportstellung des Haltemoduls 6 (Figur 4). In dieser Stellung befindet sich die Transportgutaufnahmeeinheit 16, insbesondere der Klapparm 23, in einer Höhe (Transporthöhe) derart, dass auf dem Klapparm 23 abgelegtes und über den Klapparm 23 hinausragendes Transportgut 2 sich oberhalb einer Fahrzeugtür 8 erstreckt, sodass die Fahrzeugtür 8 problemlos geöffnet und geschlossen werden, auch wenn die Transportgutaufnahmeeinheit 16 beladen ist. Die Transporthöhe ist im Wesentlichen von der Bauweise des Fahrzeugs 1 abhängig. Ein Hub der Parallelgelenkeinheit 15 kann im Hinblick auf eine Differenz zwischen der Transporthöhe an einem ausgewählten Fahrzeug 1 oder einer ausgewählten Gruppe von Fahrzeugtypen und einer ausgewählten Ladehöhe dimensioniert sein.

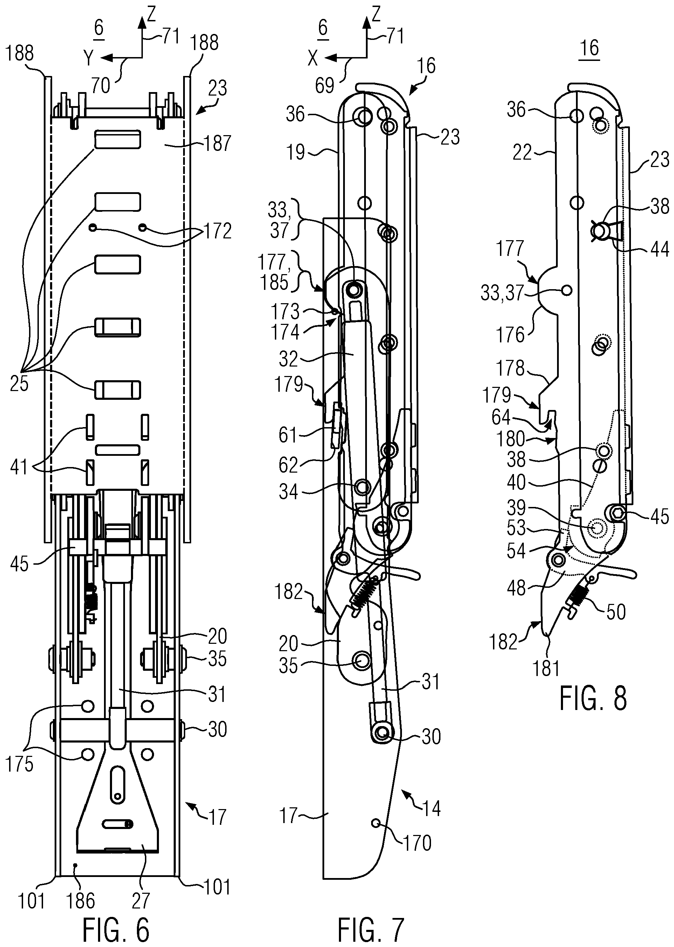

Ein Zustand, in welcher die Transportgutaufnahmeeinheit 16 vollständig eingeschwenkt ist und der Klapparm 23 vollständig eingeklappt ist, ist eine Schließstellung des Haltemoduls 6 (Figuren 6, 7). In dieser Stellung liegt der Schwenkholm 22 nahe an der Fahrzeugwand 8 an deckt der Klapparm 23 den Schwenkholm 22, die Parallelgelenkeinheit 15 und den Tragholm 17 ab., in einer Höhe (Transporthöhe) derart, dass auf dem Klapparm 23 abgelegtes und über den Klapparm 23 hinausragendes Transportgut 2 sich oberhalb einer Fahrzeugtür 8 erstreckt, sodass die Fahrzeugtür 8 problemlos geöffnet und geschlossen werden, auch wenn die Transportgutaufnahmeeinheit 16 beladen ist. Die Transporthöhe ist im Wesentlichen von der Bauweise des Fahrzeugs 1 abhängig. Ein Hub der Parallelgelenkeinheit 15 kann im Hinblick auf eine Differenz zwischen der Transporthöhe an einem ausgewählten Fahrzeug 1 oder einer ausgewählten Gruppe von Fahrzeugtypen und einer ausgewählten Ladehöhe dimensioniert sein.

Das Haltemodul 6 kann einen Entriegelungsschieber 27 aufweisen, mit welchem die Schwenkbewegung der Parallelgelenkeinheit 15 freigebbar ist (Figur 4).

An der Transportgutaufnahmeeinheit 16 können Verlängerungsstücke 28, 29 anbringbar sein (Figur 5). Dabei kann ein oberes Verlängerungsstück 28 zur Aufnahme besonders hoher Transportgüter 2, wie etwa Leitern oder dergleichen, vorgesehen und zur Anbringung am Schwenkholm 22 ausgebildet sein und kann ein unteres Verlängerungsstück 29 vorgesehen sein, um besonders breite Transportgüter aufzunehmen, und zur Anbringung am Klapparm 23 ausgebildet sein.

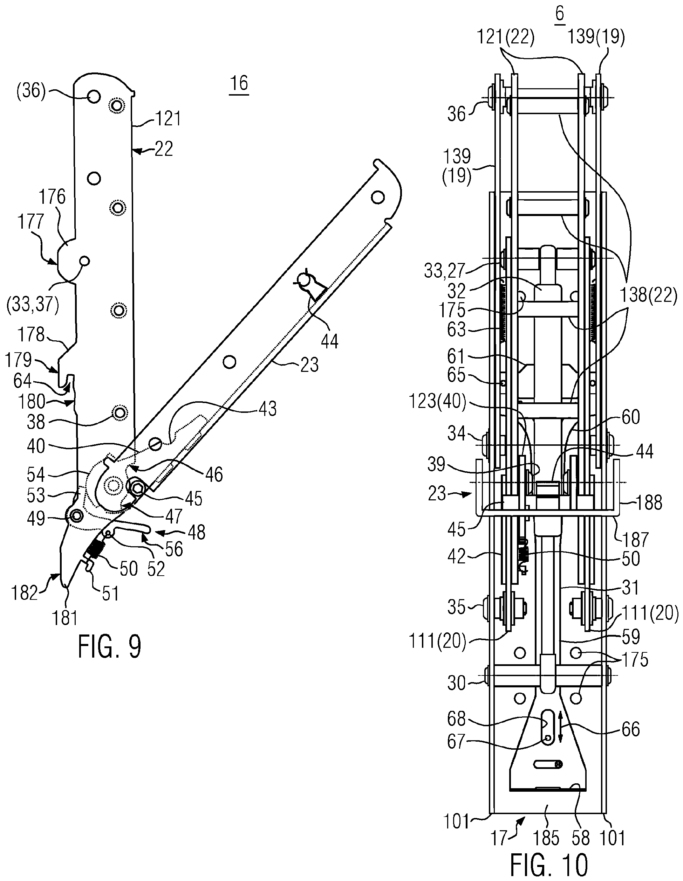

Es wird nun Aufbau und die Funktionsweise des vorstehend eingeführten Haltemoduls 6 der Transportguthaltevorrichtung 7 gemäß dem vorliegenden Ausführungsbeispiel in näheren Einzelheiten beschrieben. Hierzu werden die verschiedenen Stellungen der Transportgutaufnahmeeinheit 16 gegenüber der Trägereinheit 14 sowie die verschiedenen Stellungen des Klapparms 23 gegenüber dem Schwenkholm 22 der Transportgutaufnahmeeinheit 16 betrachtet. Die Transportgutaufnahmeeinheit 16 kann mit der Parallelgelenkeinheit 15 eine obere oder eingeschwenkte Endlage bzw. Einschwenkstellung (Figuren 4, 6, 7, 8 10, 11, 19), eine untere oder ausgeschwenkte Endlage bzw. Ausschwenkstellung (Figuren 1, 2, 3, 15) aufweisen und dazwischen verschiedene Zwischenstellungen (Figuren 5, 13, 14) annehmen. Der Klapparm 23 kann gegenüber dem Schwenkholm 22 eine obere oder eingeklappte Endlage bzw. Einklappstellung (Figuren 6, 7, 8) und eine untere oder ausgeklappte Endlage bzw. Ausklappstellung (Figuren 1 bis 5, 10 bis 15, 19) aufweisen sowie Zwischenstellungen (Figur 9) annehmen. Die Endlagen, also die Einschwenkstellung, die Ausschwenkstellung, die Einklappstellung und die Ausklappstellung können durch Anschläge definiert und gegebenenfalls durch zusätzliche Sicherungsmittel gesichert sein. Die Zwischenstellungen können als undefinierte Stellungen angenommen werden.

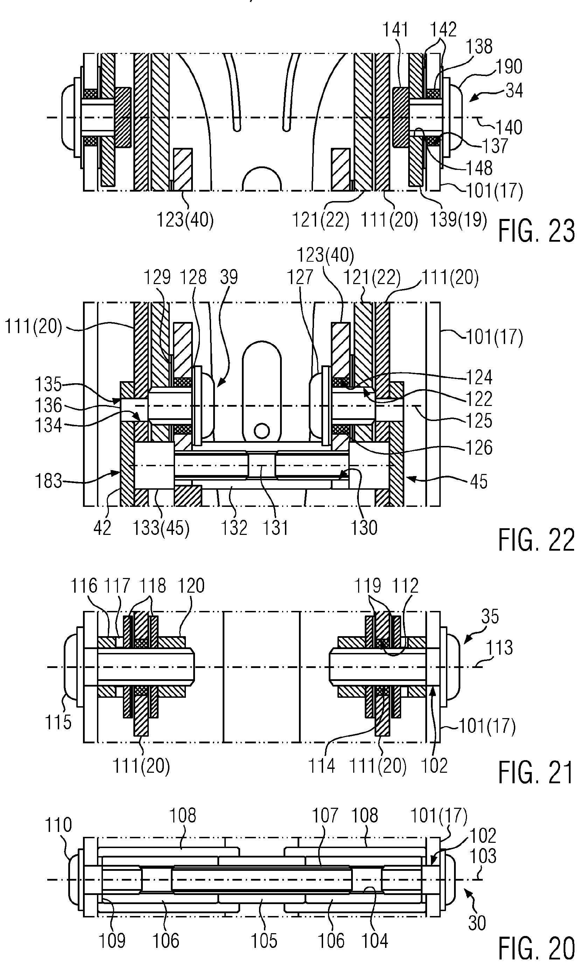

Wie bereits erwähnt, kann die Schwenkbewegung der Transportgutaufnahmeeinheit 16 in der Parallelgelenkeinheit 15 durch eine Stützfeder 21 je nach Schwenkstellung und Schwenkrichtung unterstützt oder gehemmt werden. Die Stützfeder 21 kann eine Gasfeder sein, die in an sich bekannter Weise eine Kolbenstange 31 und einen Zylinder 32 aufweisen kann (vgl. insbesondere Figuren 6, 7). Im dargestellten Ausführungsbeispiel ist ein Ende der Kolbenstange 31 an dem Tragholm 17 der Trägereinheit 14 in einem festen Federlager 30 gelagert und ist ein Ende des Zylinders 32 in einem mitschwenkenden oder freien Federlager 33 an dem Schwenkholm 22 gelagert. Der obere Parallellenker 19 der Parallelgelenkeinheit 15 ist in einem oberen festen Lenkerlager 34 an dem Tragholm 17 und einem oberen mitschwenkenden bzw. freien Lenkerlager 36 an dem Schwenkholm 22 gelagert, und der untere Parallellenker 20 ist in einem unteren festen Lenkerlager 35 an dem Tragholm 17 und in einem unteren freien Lenkerlager 37 an dem Schwenkholm 22 gelagert. (Für die Anordnung der vorstehend beschriebenen Lager 30, 33-37 vergleiche insbesondere die Figuren 6 bis 10, 13 bis 15 und für deren Ausgestaltung insbesondere die Figuren 20 bis 27.)

Es sei angemerkt, dass die Begriffe "oben" und "unten" sich auf ein modulbezogenes kartesisches Koordinatensystem beziehen, deren Richtungsdefinitionen an die Montagesituation an einem Fahrzeug 1 angelehnt sind. Das modulbezogenes Koordinatensystem definiert eine Blickrichtung (x) 69, die bei montiertem Haltemodul 6 zum Fahrzeug 1 weist und der Blickrichtung eines vor der Fahrzeugwand 8 stehenden Person entspricht, eine Querrichtung (y) 70, die dem Verlauf der Lagerachsen der Lager 30, 33-37 entspricht, und eine Hubrichtung (z) 71, welche einer Längsachse des Tragholms 17, genauer einer Verbindungslinie der Lagerachsen der festen Lenkerlager 34, 35 entspricht. Es sei angemerkt, dass die Blickrichtung (x) 69 des Haltemoduls 6 in etwa der Fahrzeugquerrichtung (Q) 4 entsprechen kann, die Querrichtung (y) 70 des Haltemoduls 6 in etwa der Fahrzeuglängsrichtung (L) 3 entsprechen kann und die Hubrichtung (z) 71 des Haltemoduls 6 in etwa der vertikalen Richtung (V) 5 entsprechen kann, wobei sich aus der konkreten Form der Fahrzeugseitenwand 8 (Linienführung entlang der Fahrzeuglängsachse und Neigung gegenüber der vertikalen Richtung) gewisse Winkelabweichungen zwischen Achsen des fahrzeuggebundenen Koordinatensystems L, Q, V und dem modulfesten Koordinatensystem x, y, z ergeben kann.

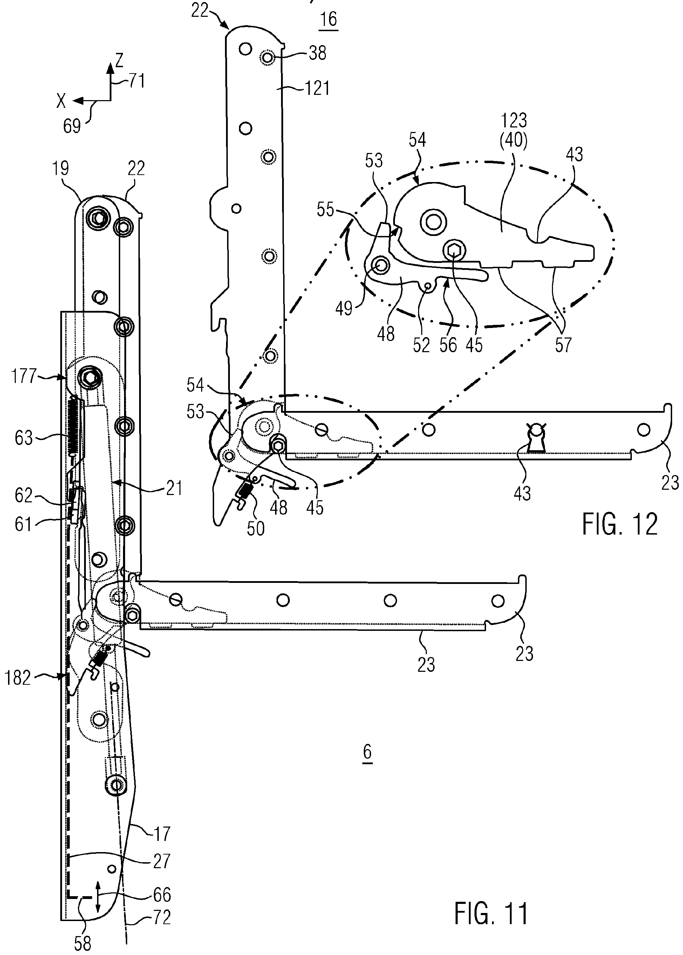

In der Ausschwenkstellung weisen die Parallellenker 19, 20 einen Winkel zu einer durch die Achsen der festen Lenkerlager 34, 35 (nachstehend auch als Festlagerachsenebene bezeichnet) derart auf, dass die Transportgutaufnahmeeinheit 16 ein Stück weit von der Fahrzeugwand 8 absteht (Figuren 1 bis 3, 15). In der Einschwenkstellung befinden sich die Achsen der freien Lenkerlager 36, 37 in Blickrichtung X gesehen hinter der Festlagerachsenebene (Figuren 7, 11). Daher können die Achsen der freien Lenkerlager 36, 37 eine obere Totpunktlage durchlaufen, die dadurch definiert ist, dass die Parallellenker 19, 20 genau vertikal stehen. Daher ist die Einschwenkstellung eine selbststabilisierende Lage, da beim Ausschwenken zunächst der obere Totpunkt überwunden werden muss. Sofern das Haltemodul 6 so am Fahrzeug angeordnet ist, dass die Hubrichtung Z mit der Vertikalrichtung V zusammenfällt, befindet sich die Totpunktlage genau in der Festlagerachsenebene, wie in den Figuren dargestellt. Wenn eine genau vertikale Ausrichtung des Haltemoduls 6 am Fahrzeug nicht möglich ist, die Hubrichtung Z also einer Wandneigung folgend zum Fahrzeugdach hin geneigt ist, wird der Bewegungsweg zwischen der oberen Totpunktlage und der Einschwenkstellung (oberen Endlage) größer, die selbststabilisierende Wirkung wird also stärker. Ein Fall, in welchem die Hubrichtung vom Fahrzeugdach weg geneigt ist (also etwa eine Fahrzeugwand auskragend geneigt ist), ist schwer vorstellbar. Sollte sich eine solche Einbausituation dennoch einstellen, ist es von Vorteil, wenn die Einschwenkstellung so weit hinter der Festlagerachsenebene liegt, dass zwischen der oberen Totpunktlage und der Einschwenkstellung (oberen Endlage) noch ein Restweg verbleibt (mit anderen Worten, dass sich überhaupt noch eine obere Totpunktlage einstellen kann). Es sei angemerkt, dass die vorstehenden Betrachtungen zur Selbststabilisierung die Wirkung der Stützfeder 21 ausklammern.

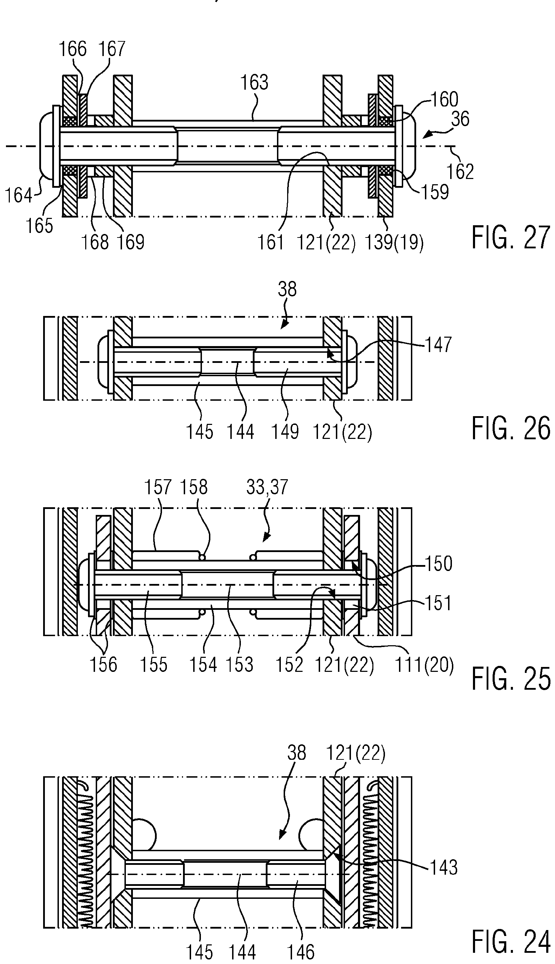

Das Durchlaufen des oberen Totpunkts kann dadurch ermöglicht werden, dass die Parallellenker 19, 20 so konstruiert sind, dass sie aneinander vorbei laufen können. Beispielsweise kann der obere Parallellenker 19 aus zwei Seitenwänden 139 (Figuren 23, 27) aufgebaut sein, die jeweils an Seitenwänden 101 des Tragholms 17 gelagert sind, und kann der untere Parallellenker 20 insgesamt schmal genug sein, um zwischen den beiden Seitenwänden 139 des oberen Parallellenkers 19 und deren seitlichen Lagerelementen hindurch zu laufen.

Das feste Federlager 30 kann unterhalb des unteren festen Lenkerlagers 35 und bezüglich der Festlagerachsenebene nach außen (entgegen der Blickrichtung X) versetzt angeordnet sein. Das freie Federlager 33 kann mit dem unteren freien Lenkerlager 37 zusammenfallen. Damit können der Kraftangriffswinkel und der Lasthebel der Stützfeder 21 insbesondere im Bereich des oberen Totpunkts und der Einschwenkstellung verbessert werden. Wenn, wie insbesondere Fig. 11 gezeigt, die Federkraftlinie stets auf der Außenseite der Parallellenker-Achsen bleibt, drückt die Feder stets nach innen, und es kann damit auch erreicht werden, dass die Stützfeder 21 stets zur Einschwenkstellung hin drückt. Damit kann auch die stabilisierende Wirkung der oberen Totpunktlage verstärkt werden. Es ist anzumerken, dass die Positionierung der Federlager 30, 33 rein beispielhaft ist und an konkrete konstruktive und funktionelle Vorgaben wie etwa wünschenswerte kinematische Verhältnisse angepasst werden kann.

Der Tragholm 17 kann einen U-förmigen Querschnitt aufweisen, der durch eine Basis 186 und zwei Seitenwände 101 gebildet wird (vgl. insbesondere Figuren 6, 10). Über Anschraubbohrungen 175 in der Basis 186 kann der Tragholm 17 an einer Karosserie eines Fahrzeugs befestigbar sein, wie später noch genauer beschrieben werden wird. Insbesondere definiert die Basis 186 auch eine Fahrzeugseite des Tragholms 17 und des gesamten Haltemoduls 6.

Der Schwenkholm 22 kann zwei Seitenwänden 121 aufweisen, welche durch Querriegel 38 als weiteres strukturelles Element miteinander verbunden sein können (vgl. auch Figuren 9, 10, 24, 26). Die Seitenwände 121 können eine plattenartige Grundform aufweisen und Vorsprünge, Ausnehmungen, Bohrungen etc. aufweisen. Insbesondere können die Seitenwände 121 einen Vorsprung 176 mit einer Anlagefläche 177, einen Haken 178 mit einer Außenfläche 179 und einem Rastschlitz 64, eine an den Rastschlitz 64 anschließende Abstufung 180, eine weitere Erhebung in Form eines Sporns 181 mit einer Anlagefläche 182 und Haken 51 sowie Bohrungen zur Definition von Achsen der Querriegel 38 sowie der Lager 36, 39, 49 aufweisen, deren Funktion und genauer Aufbau im weiteren Verlauf beschrieben werden wird..

Die Querriegel 38 können durch Verbindungsmuffen 145 gebildet werden, die über Gewindeschrauben 146, 149, die von außen durch entsprechende Bohrungen 143, 147 in den Seitenwänden 121 des Schwenkholms 22 geführt und im Innengewinde der jeweiligen Verbindungsmuffe 145 verschraubt sind, gebildet werden (Figuren 24, 25). Je nach Freiraum an der Außenseite der Seitenwände 121 können die Gewindeschrauben 146, 149 als Senckopfschrauben (146) oder Flachkopfschrauben (149) ausgeführt und die Bohrungen 143, 147 als Senkbohrung (143) oder einfache Durchgangsbohrung (147) ausgebildet sein. Durchgangsbohrungen (147) können mit enger Toleranz ausgebildet sein, um die Stabilität des Schwenkholms 22 zu verbessern. Die Querriegel 38 können gleichzeitig auch als Belegungsmittel zum Belegen mit dem Zurrmittel 26 zum Festzurren des Transportguts 2 ausgebildet sein können (vgl. auch Figuren 2, 3, 10). Die Gewindeschrauben (Flachkopfschrauben) 149 können ein Gewinde bis zum Kopf aufweisen. Sofern die Gewindeschrauben 149 einen Schaftabschnitt aufweisen, ist dieser so zu dimensionieren, dass er vor dem Eingriff in die Verbindungsmuffe 145 endet. Die Bohrungen 147 können an den Nenndurchmesser der Gewindeschrauben 149 angepasste Durchgangsbohrungen sein. Dabei kann der Bohrungsdurchmesser eng toleriert sein, um Relativbewegungen zwischen Schraube und Bohrung zu minimieren. Es ist denkbar und vorteilhaft, wenn eine der Bohrungen 147 als Gewindebohrung ausgeführt ist und die Verbindungsmuffe 145 gegen die die Gewindebohrung aufweisende der Seitenwände 121 zu kontern, um die Achse in Drehrichtung noch sicherer zu fixieren und Relativbewegungen zwischen Schraube und Bohrung weiter zu minimieren.

Die Konstruktion mittels Seitenwänden 121 und Querriegeln 38 kann auch den strukturellen Aufbau ohne Schweißungen ermöglichen und damit gegebenenfalls verbundenen Schweißverzug vermeiden. Ferner ist die massenhafte Herstellung der Seitenwände 121 mit entsprechender Formgebung durch Stanzen, Schneiden, Bohren etc. besonders einfach zu verwirklichen. Alternativ kann der Schwenkholm 22 auch als Schweißteil oder aus einem Standardprofil hergestellt sein.

Der Klapparm 23 kann einen U-förmigen Querschnitt aufweisen, der durch eine Basis 187 und zwei Seitenwände 188 gebildet wird. Die Anlenkung des Klapparms 23 an dem Schwenkholm 22 der Transportgutaufnahmeeinheit 16 kann über ein Achslager 39 erfolgen. Zu diesem Zweck kann eine Achsaufnahme 40 in Form von zwei Stützwänden 123 vorgesehen sein, die über Schweißlaschen 57, welche in Schweißschlitze 41 in der Basis 187 des Klapparms 23 ragen, am Klapparm 23 angeschweißt ist (Figuren 6, 8, 9 bis 12). Die Stützwände 123 können insbesondere parallel zu den Seitenwänden 187 des Klapparms 23 ausgebildet sein (Figur 22, Klapparm 23 dort nicht dargestellt). Fluchtende Gewindebohrungen 122 in Seitenwänden 121 des Schwenkholms 22 und fluchtende Passbohrungen 124 in den Stützwänden 123 definieren eine Lagerachse 125 des Achslagers 39. Die Passbohrungen 124 nehmen jeweils eine Gleithülse 126 mit Innengewinde auf. Eine Schraube 127 ist jeweils durch die Gleithülse 126 hindurch und in die Gewindebohrung 122 am Schwenkholm 22 jeder Seite geschraubt, wobei Anlaufscheiben 128 unter dem Schraubenkopf und Anlaufscheiben 129 zwischen Stützwand 123 der Achsaufnahme 40 und Seitenwänden 121 des Schwenkholms 22 angeordnet sind. Optional kann die Verschraubung in der Gewindebohrung 122 und/oder im Innengewinde der Gleithülse 126 durch Verklebung gesichert sein. Die Gewindeschrauben 127 können ein Gewinde bis zum Kopf aufweisen. Sofern die Gewindeschrauben 127 einen Schaftabschnitt aufweisen, ist dieser so kurz zu dimensionieren, dass er vor dem Eingriff in die Gleithülse 126 endet.

Die Stützwände 123 der Achsaufnahme 40 können eine gewisse Länge aufweisen, um die erforderliche Stabilität und Schweißlänge am Profil des Klapparms 23 zu erreichen. Um beim Einklappen der Transportgutaufnahme 22 einen Anschlag an einem Querriegel 38 des Schwenkholms zu vermeiden, können die Stützwände 123 der Achsaufnahme 40 jeweils eine Ausklinkung 43 in Form einer Rundkerbe aufweisen (vgl. Einzelheit Figur 12), der in der Einklappstellung einem unteren einer Vielzahl von Querriegeln 38, die sich zwischen Seitenwänden des Schwenkholms 22 erstrecken, Raum gibt (Figur 8).

Die Achsaufnahme 40 kann ein Anschlagelement 45 aufweisen (vgl. Figuren 6, 9 bis 12 mit Einzelheit), der während der Klappbewegung des Klapparms 23 an einer am Schwenkholm 22 ausgebildeten Bahn mit zwei Endanschlägen 46, 47, welche die Endpositionen (Einklappstellung, Ausklappstellung) des Klapparms 23 definieren, entlang läuft. Das Anschlagelement 45 kann einen ähnlichen Aufbau wie die Querriegel 38 des Schwenkholms 22 aufweisen. Das Anschlagelement 45 kann eine Achse 131 aufweisen, die durch fluchtende Bohrungen 130 in den Blechen (Stützwänden) 123 der Achsaufnahme 40 definiert ist (Figur 22). Zwei Gewindeschrauben 133, insbesondere Zylinderschrauben mit Innensechskant und vorzugsweise hohem Kopf, können von außen durch die Bohrungen 130 geführt und in eine zwischen den Blechen 123 der Achsaufnahme 40 angeordnete Verbindungsmuffe 132 geschraubt sein. Die Gewindeschrauben 133 können ein Gewinde bis zum Kopf aufweisen. Sofern die Gewindeschrauben 133 einen Schaftabschnitt aufweisen, ist dieser so zu dimensionieren, dass er vor dem Eingriff in die Verbindungsmuffe endet. Die Bohrungen 130 können an den Nenndurchmesser der Gewindeschrauben 133 angepasste Durchgangsbohrungen sein. Dabei kann der Bohrungsdurchmesser eng toleriert sein, um Relativbewegungen zwischen Schraube und Bohrung zu minimieren. Es ist denkbar und vorteilhaft, wenn eine der Bohrungen 130 als Gewindebohrung ausgeführt ist und die Verbindungsmuffe 132 gegen die die Gewindebohrung aufweisende der Stützwände 123 zu kontern, um die Achse in Drehrichtung noch sicherer zu fixieren und um Relativbewegungen zwischen Schraube und Bohrung weiter zu minimieren.

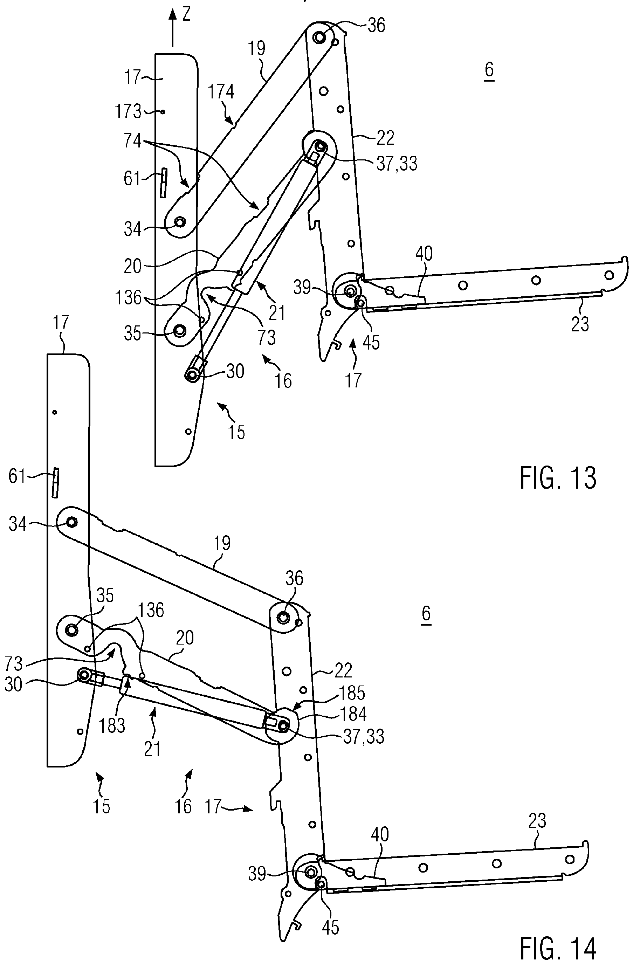

Das Anschlagelement 45 verschafft der Achsaufnahme 40 mittels der Verbindungsmuffe 132 auch weitere strukturelle Stabilität. Die Verbindungsmuffe 132 kann auch als weiterer Verankerungspunkt für Zurrmittel verwendet werden. Die Köpfe der Gewindeschrauben 133 bilden das eigentliche Anschlagelement 45. Sie stehen von Außenflächen der Bleche 123 weg und laufen, wie oben beschrieben, an der Bahn am Klapparm 23 zwischen den Endanschlägen 46, 47 entlang. Wenn das Anschlagelement 45 am unteren Endanschlag 47 anliegt, ist die Ausklappstellung des Klapparms 23 erreicht. Diese wird unabhängig von der Schwenkbewegung der Transportgutaufnahmeeinheit 16 beibehalten. Ebenso kann der Klapparm 23 in jeder beliebigen Schwenkstellung der Transportgutaufnahmeeinheit 16 ein- oder ausgeklappt werden. Zusätzlich kann das Anschlagelement 45 im hochgeschwenkten Zustand der Transportgutaufnahmeeinheit 16 an einer am unteren Parallellenker 20 in dessen Seitenwänden 111 und Verstärkungsblechen 42 ausgebildeten Anlagefläche 183 (vgl. Figuren 14, 22) anliegen, wenn der Klapparm 23 ausgeklappt ist. Diese Anlagefläche 183 hat den Vorteil, dass bei beladenem Klapparm 23 die Last im hochgeschwenkten Zustand besser verteilt und gesichert ist und die ganze Struktur gegeneinander abgestützt ist. Die Ausbildung des Anschlagelements 45 als Zylinderschrauben 133 ist dabei nur als Beispiel zu verstehen. Auch wenn dies in Figur 22 nicht dargestellt ist, kann sich das Anschlagelement 45 jeweils über die Seitenwand 111 des unteren Parallellenkers 20 hinaus bis über das Verstärkungsblech 42 erstrecken.

Durch den oberen Endanschlag 46 wird die Einklappbewegung des Klapparms 23 begrenzt und die Einklappstellung definiert. Eine Sicherungsfeder 44 kann an der Basis 187 des Klapparms 23 über Federbefestigungslöcher 172 angebracht sein und in der Einklappstellung an einem Querriegel 38 des Schwenkholms 22 einrasten (Figuren 6 und 8, vgl. auch Figuren 9 bis 12). Dadurch kann der Klapparm 23 in der Einklappstellung gesichert werden. Zum Ausklappen muss eine gewisse (horizontale) Zugkraft auf den Klapparm 23 aufgebracht, damit die Sicherungsfeder 44 von dem Querriegel 38 ausrastet und den Klapparm 23 freigibt.

Durch den unteren Endanschlag 47 wird die Ausklappbewegung des Klapparms 23 begrenzt und die Ausklappstellung definiert (Figuren 11 bis 15, 19). Durch einen federbelasteten Rasthebel 48 kann der Klapparm 23 in der Ausklappstellung gegen Einklappen gesichert werden (Figur 12 mit Einzelheit). Der Rasthebel 48 ist in einem Hebellager 49 an der Seitenwand 121 des Schwenkholms 22 drehbar gelagert. Eine Zugfeder 50 erstreckt sich zwischen einem Haken 51 am Sporn 181 des Schwenkholms 22 und einer Öse 52 am Rasthebel 48 und spannt einen Rastarm 53 des Rasthebels 48 in Richtung der Achsaufnahme 40 vor. Die Achsaufnahme 40 weist eine Bahn 54 auf, die um die Lagerachse 125 des Achslagers 39 herum in etwa konzentrisch verläuft und an welcher der Rastarm 53 des Rasthebels 48 anliegt, solange der Klapparm 23 sich in der Einklappstellung (Figur 8) oder einer Zwischenstellung (Figur 9) befindet. An einer vorgegebenen Stelle der Bahn 54 weicht diese in Richtung der Achse 125 zurück, um einen Raststufe 55 auszubilden. Die Raststufe 55 und der Rastarm 53 des Rasthebels 48 sind zueinander so gestaltet, dass der Rastarm 53 in die Raststufe 55 greifen kann, wenn der Klapparm 23 die Ausklappstellung erreicht hat. Unter der Zugwirkung der der Zugfeder 50 tut er dies auch und wird dort gehalten, um so ein Einschwenken des Klapparms 23 zu blockieren. Erst durch Manipulation des Rasthebels 48 an einer Greiffläche 56 wird der Rastarm 53 außer Eingriff mit der Raststufe 55 gebracht und der Klapparm 23 in Einklapprichtung freigegeben. Auch wenn in der Figur nur ein Rasthebel 48 gezeigt ist, können auch zwei Rasthebel 48 vorgesehen sein, die jeweils an einer der beiden Seitenwände 121 des Schwenkholms 22 gelagert sind und an einer der Stützwände 123 der Achsaufnahme 40 anliegen. Sofern zwei Rasthebel 48 vorhanden sind, können diese durch eine Querverbindung verbunden sein. Die doppelte Ausführung des Rasthebels 48 kann die Einrastung sicherer machen, eine Betätigung ergonomischer machen und von jeder Seite aus ermöglichen.

In der Einschwenkstellung der Transportgutaufnahmeeinheit 16 können Anlageflächen 185, die an Erhebungen (Vorsprüngen) 184 der Seitenwände 111 des unteren Parallellenkers 20 ausgebildet sein können, Anlageflächen 177, die an Vorsprüngen 176 der Seitenwände 121 des Schwenkholms 22 ausgebildet sein können, und Anlageflächen 182, die am Sporn 181 der Seitenwände 121 des Schwenkholms 22 ausgebildet sein können, an der Basis 186 des Tragholms 17 anliegen. Die Einschwenkstellung bzw. die obere Endstellung der Transportgutaufnahmeeinheit 16 kann durch diese Anlagen definiert sein

Die Einschwenkstellung kann durch einen Riegel (hier ein Riegelblech) 61 gesichert werden (Figuren 7, 10 bis 15). Der Riegel 61 kann in Führungsschlitzen 62 in den Seitenwänden 101 des Tragholms 17 beidseits geführt und durch zwei Spannfedern 63 in einer Verriegelungsrichtung (hier: nach oben) vorgespannt sein. Die Spannfedern 63 können mit einem (oberen) Ende an Stiften 173 oder dergleichen, die an dem Tragholm 17 befestigt sein können, gelagert (beispielsweise eingehängt) sein. Der obere Parallellenker 20 kann in seinen Seitenwänden 111 jeweils eine Ausklinkung 174 aufweisen, um einen Anschlag an dem jeweiligen Stift 173 zu vermeiden (Figur 7, vgl. auch Figur 13). Die Spannfedern 63 können mit dem anderen (unteren) Ende am Anschlussende 60 des Entriegelungsschiebers 27 und an den oben beschriebenen Stiften 173 ansetzen. In der Einschwenkstellung ruht der Riegel 61 mit seitlichen Enden in Rastschlitzen 64 der Haken 178, die an den Seitenwänden 121 des Schwenkholms 22 ausgebildet sind (Figuren 7, 8, 9, 11, 19). Der Riegel 61 erstreckt sich quer über den Tragholm 17 und ist mit dem Entriegelungsschieber 27 gekoppelt und betätigbar, wie nachstehend genauer erläutert wird. Der Entriegelungsschieber 27 kann grundsätzlich in Form eines lang gestreckten Blechteils aufweisen, das sich von einem unteren Bereich des Tragholms 17 bis in den Bereich des Riegels 61 erstreckt. Im unteren Bereich weist der Entriegelungsschieber 27 eine Handhabe 58 auf, die beispielsweise in Form einer rechtwinklig von dem Blechteil abstehenden Abkantung ausgebildet sein kann (vgl. insbesondere Figur 10). An die Handhabe 58 schließt sich eine Verbindungslasche 59 an, die in ein Anschlussende 60 übergeht. Das Anschlussende 60 ist mittels Riegelverbindern 65 mit dem Riegel 61 verbunden. Die Riegelverbinder 65 können beispielsweise durch Gewindeschrauben und Muttern, insbesondere Setzmuttern, ausgebildet sein, welche an in überlappenden Bereichen des Anschlussendes 60 und des Riegels 61 ausgebildete Bohrungen angebracht sind. Ein am Tragholm 17 angebrachter Führungspin 67 kann in einem Langloch 68 des Entriegelungsschiebers 27 aufgenommen sein und diesen dadurch am unteren Ende, d.h. im Bereich der Handhabe 58, führen.

Wenn der Entriegelungsschieber 27 in Entriegelungsrichtung 66 nach unten gezogen wird, bewegt sich auch der Riegel 61 gegen die Federkraft der Spannfedern 63 nach unten und kommt außer Eingriff mit den Rastschlitzen 64. Da die Stützfeder 21 in der Einschwenkstellung zur Fahrzeugseite (Basis des Tragholms 17) hin drückt, wie zuvor beschrieben, ist diese Einschwenkstellung weiterhin kinematisch gesichert. Die Transportgutaufnahmeeinheit 16 kann nun durch horizontalen oder in etwa horizontalen manuellen Zug aus der Einschwenkstellung und über die Totpunktlage hinaus gebracht werden, sodass der Absenkvorgang beginnen kann. Hierbei sind zwei Fälle zu unterscheiden, die nun im Einzelnen erläutert werden.

Wenn das Haltemodul 6 keine Last trägt, können die Anlageflächen 177, 182, 185 weiter in Anlage am Tragholm 17 bleiben (vgl. auch Figur 7). In diesem Fall kann der Riegel 61 wieder in den Rastschlitz 64 gleiten, wenn der Entriegelungsschieber 27 losgelassen wird. Durch Zug an der Transportgutaufnahmeeinheit 16 (beispielsweise am Klapparm 23) kann nun der obere Totpunkt überwunden werden.

Wenn dagegen eine Last jenseits eines bestimmten Betrags auf dem Klapparm 23 aufgenommen ist, kann die Transportgutaufnahmeeinheit 16 aufgrund des durch die Last wirkenden Hebelmoments ein Drehmoment erfahren, welches am oberen freien Lenkerlager 36 vom Tragholm 17 weg und am unteren freien Lenkerlager 37 zum Tragholm 17 hin wirkt. Da die Parallellenker 19, 20 in der oberen Endlage aber nicht nur parallel, sondern zumindest nahezu oder gar genau kollinear verlaufen und sich der Schwenkholm 22 weiterhin an der Anlagefläche 182 am unteren Ende (Sporn 181) abstützt, kann es durch dieses Drehmoment zu einem hier erwünschten "Durchschlagen" des Parallelgelenks kommen, sodass sich die Parallellenker 19, 20 gegenseitig blockieren können und ein unkontrolliertes Absenken der Transportgutaufnahmeeinheit 16 vermieden werden kann. Ein Durchschlagen ist dabei so zu verstehen, dass die Parallellenker 19, 20 in gegensinniger Richtung drehen wollen. Da das untere freie Lenkerlager 37 über die Anlagefläche 185 gegen den Tragholm 17 abgestützt ist und nicht weiter in dieser Richtung ausweichen kann, ist das gesamte Parallelgelenk blockiert. Dies hält die Transportgutaufnahmeeinheit 16 zuverlässig in der Einschwenkstellung. Die Blockade kann nur durch kräftigen Zug vom Fahrzeug weg auf Höhe des unteren freien Lenkerlagers 37 überwunden werden.

Dabei ist es erwünscht, wenn das obere freie Lenkerlager 36 ein Stück von dem Tragholm 17 weg weicht, sodass der Riegel 61 aus dem Bereich des Rastschlitzes 64 kommt und insbesondere hinter die Anlagefläche 179 des Hakens 178 kommen kann. Der Entriegelungsschieber 27 kann dann losgelassen werden, ohne erneut in dem Rastschlitz 64 einzurasten. Ein Werker kann dann beispielsweise auch ein anderes Haltemodul 6 lösen, ohne dass die Last unkontrolliert absinkt. Erst durch gemeinsamen Zug an allen Haltemodulen 6, beispielsweise durch Zug an dem Transportgut 2 selbst, kann dann die Blockade der Parallellenker 19, 20 und die obere Totpunktlage überwunden werden und die Last kontrolliert abgesenkt werden.

Es ist zu erwähnen, dass der Schwenkholm in der Einschwenkstellung (obere Endlage) grundsätzlich parallel zum Tragholm 17 verlaufen kann. Es kann allerdings auch erwünscht sein, wenn der Schwenkholm 22 außerhalb der Einschwenkstellung eine leichte Rücklage derart aufweist, dass das obere Ende des Schwenkholms 22 näher am Tragholm 17 liegt als das untere Ende. Dieser Mechanismus ist zunächst überraschend, da aufgrund der Parallelgelenkanlenkung sich die Winkellage der Transportgutaufnahmeeinheit über den Schwenkbereich theoretisch nicht ändern sollte. Allerdings können sich in der Praxis aufgrund von Lagerspiel und/oder elastischen Effekten geringfügige Abweichungen von der Parallelität der Parallellenker 19, 20 und/oder Holmen 17, 22 einstellen, insbesondere im Bereich der oberen Endlage, in welcher die Parallellenker 19, 20 kollinear oder sehr dicht aneinander verlaufen. Solche Abweichungen können gemäß dem beschriebenen Ausführungsbeispiel ausgenutzt werden, um in den jeweiligen End- und/oder Zwischenlagen (also insbesondere des Schwenkholms 22) zu erreichen.

Beim Einschwenken werden zunächst die oberen Anlageflächen 177, 185 an der Basis 186 des Tragholms 17 anschlagen. Zur Dämpfung des Anschlags können Kantenschutzprofile auch im Bereich der Anlageflächen vorgesehen sein. Durch manuellen Druck zum Fahrzeug hin wird dann das untere Ende des Schwenkholms 22 um die oberen Anlageflächen 177, 185 herum zum Tragholm 17 hin drehen, bis die Anlagefläche 179 des Hakens 178 an dem Riegel 61 anschlägt oder, sofern, letzterer bereits heruntergezogen ist, die Anlagefläche 185 des Sporns 181 an der Basis des Tragholms 17 anschlägt. Bei Anlage an dem Riegel 61 können bei entsprechender geometrischer Auslegung die Parallellenker 19, 20 bereits die oben beschriebene, blockierte Lage einnehmen, was die weitere Handhabung einfacher macht: in diesem Fall wird bei Ziehen des Riegels 61 nach unten der Schwenkholm 22 weiter drehen, bis die Anlagefläche 185 des Sporns 181 am Tragholm 17 anliegt, und sodann kann der Riegel 61 in dem Rastschlitz 64 einrasten. Alternativ kann die blockierte Lage der Parallellenker 19, 20 erst nach Überwinden eines weiteren Wegs zum Tragholm 17 hin eingenommen werden: dies zwingt den Werker zur bewussten Betätigung des Riegels 61, was auch ein Sicherheitsmerkmal sein kann. Optional kann der Riegel 61 in der ausgerasteten Lage (untere Lage) fixierbar sein und bei Anlage der Anlagefläche 185 des Sporns 181 oder kurz davor mechanisch freigebbar sein, um ein selbsttätiges Einrasten des Riegels 61 zu erreichen.

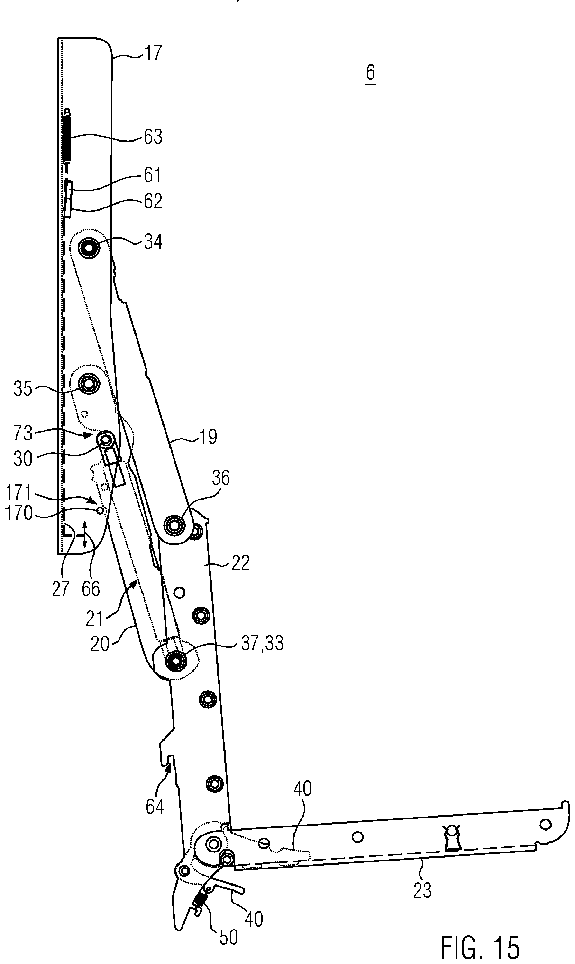

Die Transportgutaufnahmeeinheit 16 kann nun über Zwischenstellungen (beispielhaft Figuren 13, 14) bis in die Ausschwenkstellung abgesenkt werden (Figur 15). Die Ausschwenkstellung oder untere Endlage kann durch Anlage des unteren Parallellenkers 20 am festen Federlager 30 definiert sein. Zu diesem Zweck kann der untere Parallellenker eine Auskehlung 73 aufweisen, die auf dem festen Federlager 30 aufliegen kann. Zum Ausgleich eines Querschnittsverlusts im Bereich der Auskehlung 73 kann in diesem Bereich ein Verstärkungsblech 42 auf jede Seitenwand 111 des unteren Parallellenkers 20 aufgesetzt sein (vgl. auch Figur 22). Die Befestigung des Verstärkungsblechs 42 kann über Spannstifte 136 erfolgen, die in Bohrungen 135, 134 der Seitenwand 111 und des Verstärkungsblechs 42 eingesetzt sind. Alternativ oder zusätzlich kann die Verbindung auch durch andere Verbindungstechniken wie etwa Nieten, Schrauben, Punktschweißung, Reibschweißen, Kleben oder andere hergestellt werden. Alternativ oder zusätzlich kann die Ausschwenkstellung (untere Endlage) durch Anlage des unteren Parallellenkers 20 an einem Querriegel 170 am Tragholm 17 unterhalb des festen Federlagers 30 definiert sein; zu diesem Zweck kann eine Eindellung 171 am unteren Parallellenker 20 vorgesehen sein, um die Anlagefläche zu vergrößern (Figuren 15, 7). In diesem Fall kann die Auskehlung 73 nur der Vergrößerung des Schwenkbereichs dienen, ohne dass es zur Anlage am festen Federlager 30 kommen muss. In der Ausschwenkstellung kann die Federkraftwirklinie durch die Längsachse zwischen dem festen und dem freien unteren Lenkerlager 35, 37 verlaufen, sodass die Federwirkung in diesem Punkt neutralisiert ist. Diese untere Endlage kann somit als ein unterer Totpunkt der Stützfeder 21 verstanden werden.

Nach Beladen oder Entladen in der Ausschwenkstellung kann die Transportgutaufnahmeeinheit 16 über die Zwischenstellungen (Figuren 14, 13) wieder in die Einschwenkstellung (Figur 11) gebracht werden.

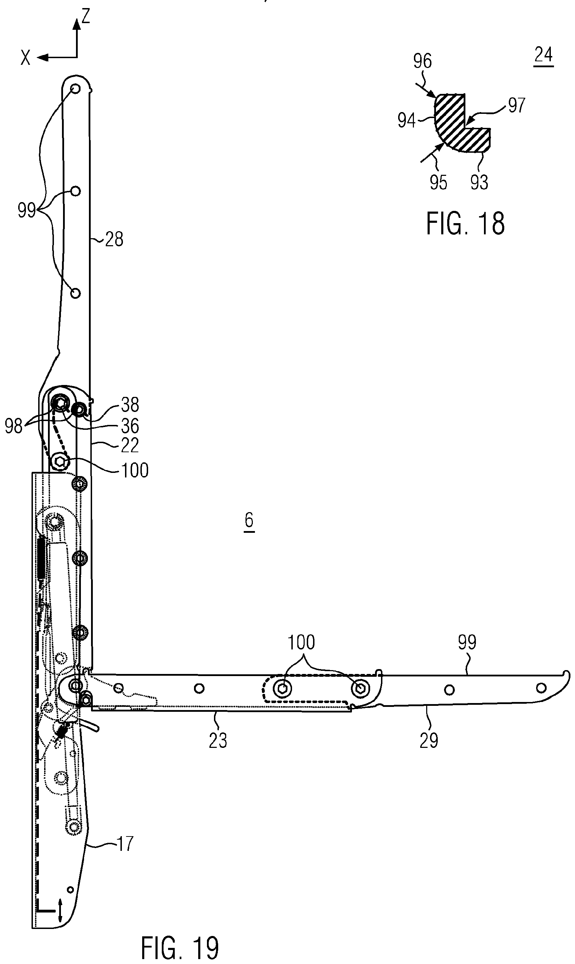

Zur Verlängerung der Auflageflächen für Transportgut 2 am Schwenkholm 22 und am Klapparm 23 können die Verlängerungsstücke 28, 29 vorgesehen sein (Figuren 5, 19). Die Verlängerungsstücke 28, 29 können jeweils durch zwei parallele Blechstücke gebildet werden, die durch Querriegel 99 ähnlich denen am Schwenkholm 22 verbunden sind. Das obere Verlängerungsstück 28 kann zur Anbringung am Schwenkholm 22 über entsprechende Auskehlungen 98 auf das obere freie Lenkerlager 36 und einen obersten der Querriegel 38 aufgesetzt und über Bohrungen mittels eines Splintstifts 100 gesichert werden. Das untere Verlängerungsstück 29 kann zur Anbringung am Klapparm 23 über Bohrungen mittels Splintstiften 100 gesichert werden.

Wie bereits erwähnt, kann ein Kantenschutzprofil 24 zum Schutz des Transportguts 2 an zum Transportgut weisenden Kanten des Schwenkholms 22 (äußere Kanten, nach -x weisend) und des Klapparms 23 (obere Kanten, nach +z weisend). Das Kantenschutzprofil kann auch an den Verlängerungsstücken 28, 29 angebracht sein. Das Kantenschutzprofil 24 kann aus einem elastischen bzw. weichen Material (relativ zu dem Material des Schwenkholms 22 und des Klapparms 23) ausgebildet sein. Das Kantenschutzprofil 24 kann ein L-Profil sein mit zwei Schenkeln 93, 94. Einer der Schenkel 93 kann kürzer als der andere Schenkel 94 sein. Der kürzere Schenkel 93 kann auf der jeweiligen zum Transportgut weisenden Kante aufliegen und der längere Schenkel 94 kann seitlich am jeweiligen Profil anliegen, wobei das Kantenschutzprofil 24 angeklebt sein kann. Ein innerer Übergang zwischen den Schenkeln 93, 94 kann durch eine scharfe Abwinklung 97 gebildet sein, ein äußerer Übergang gerundet mit Rundung 95. Die freien Enden der Schenkel 93, 94 können eine Rundung 96 aufweisen.

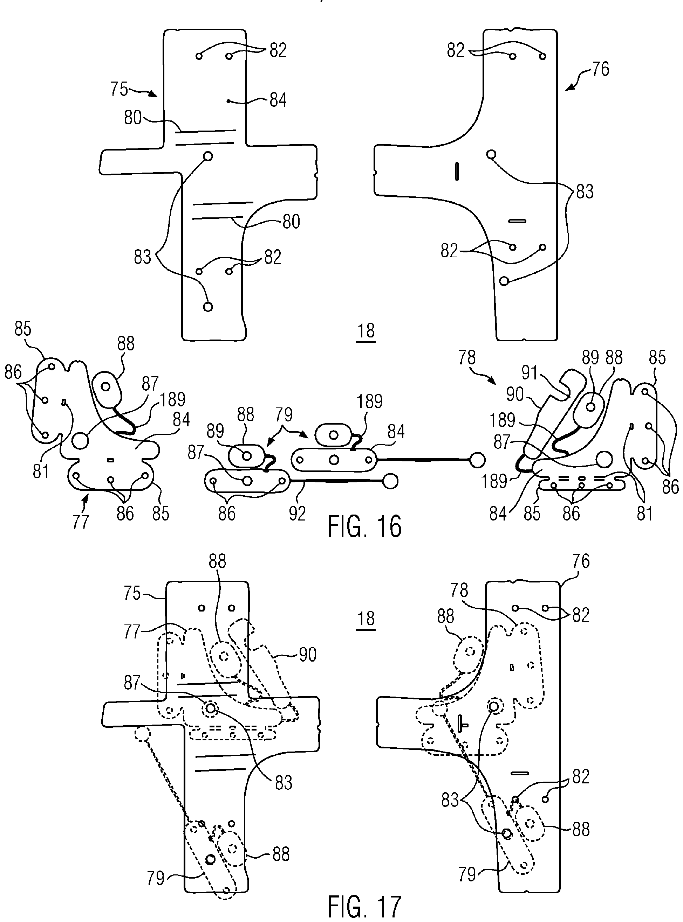

Zur Montage der Haltemodule 6 an dem Fahrzeug 1 kann ein Montagesatz 18 vorgesehen sein, der an den Fahrzeugtyp und die Befestigungsstelle angepasst sein kann (Figur 16). Unter der Annahme, dass eine Transportguthaltevorrichtung 7 zwei Haltemodule 6 aufweist, die im Bereich einer B-Säule bzw. einer Endsäule (C- oder D-Säule) des Fahrzeugs 1 anzubringen sind, kann der Montagesatz 18 ein vorderes Anschlagblech 75, ein hinteres Anschlagblech 76, ein vorderes oberes Gegenblech 77, ein hinteres oberes Gegenblech 78 und zwei untere Gegenbleche 79 aufweisen. Selbstverständlich kann ein Montagesatz 18 auch nur für ein Haltemodul 6 vorgesehen sein und nur ein Anschlagblech, ein oberes Gegenblech und ein unteres Gegenblech aufweisen. Das obere Gegenblech und das untere Gegenblech können zu einem einzigen Gegenblech zusammengefasst sein. Andererseits können auch mehr als zwei Gegenbleche je Haltemodul 6 vorgesehen sein. Die Anschlagbleche und Gegenbleche können grundsätzlich jeweils eine Grundplatte 84 aufweisen. An der jeweiligen Grundplatte 84 können je nach Bedarf Sicken 80 zur Versteifung und Perforationen 81 zur Bereitstellung von Biegelinien vorgesehen sein. Beispielsweise können durch solche Biegelinien Anschraublaschen 85 von der Grundplatte 84 abgesetzt werden, die durch Biegen an eine Innenkontur einer Fahrzeugwand angepasst werden können. An der Grundplatte 84 oder an anderer Stelle der Anschlagbleche 75, 76 können Modul-Anschraubbohrungen 82 und Fahrzeug-Anschraubbohrungen 83 vorgesehen sein. Die Modul-Anschraubbohrungen 82 können von der Rückseite (der zum Fahrzeug gewandt vorgesehenen Seite) angesenkt sein, die Fahrzeug-Anschraubbohrungen können von der Vorderseite (der vom Fahrzeug weg weisend vorgesehenen Seite) angesenkt sein, um Köpfe jeweiliger Senkkopfschrauben oberflächenbündig oder versenkt aufnehmen zu können. Die Gegenbleche 77, 78, 79 können an der Grundplatte 84 oder an anderer Stelle Fahrzeug-Anschraubbohrungen 86 und Anschraub-Gegenbohrungen 87 aufweisen. Über nachgiebige Verbindungsstücke sind an den Gegenblechen 77, 78, 79 jeweilige Mutterhalter 88 angebunden, die jeweils eine Mutterbohrung 89 aufweisen und mittels der Verbindungsstücke derart auf die jeweilige Grundplatte 84 geklappt werden können, dass die Mutterbohrungen 89 mit den Anschraub-Gegenbohrungen fluchten. Die Mutterbohrungen 89 sind ausgebildet, um eine Einpressmutter (nicht dargestellt) aufzunehmen. Die Anschraub-Gegenbohrungen 87 sind dimensioniert, um gegebenenfalls über die Stärke des Gegenblechs hinausragende Teile der Einpressmutter aufzunehmen. Im Allgemeinen ist an jedem Gegenblech 77, 78, 79 je Anschraub-Gegenbohrung 87 ein Mutterhalter 88 vorgesehen. Ferner ist im Allgemeinen für jede Fahrzeug-Anschraubbohrung 83, die an einem Anschlagblech 75, 76 ausgebildet ist, eine Anschraub-Gegenbohrung 87 über die dem jeweiligen Anschlagblech 75, 76 zugeordneten Gegenbleche 77, 78, 79 verteilt vorgesehen. Am hinteren oberen Gegenblech 78 kann über ein weiteres elastisches Verbindungsstück ein Beilagestück 90 mit einer Auskehlung 91 vorgesehen sein. An den unteren Gegenblechen 79 ist jeweils noch eine Handhabe 92 vorgesehen. Die einzelnen Elemente können in geeigneten Einheiten aus Blech gestanzt sein und über Verbindungsstege 189 miteinander verbunden sein. An diesen Verbindungsstegen 189 können die Elemente zum Gebrauch durch Biegen zueinander positioniert oder auch voneinander getrennt werden.

Eine Montage der Haltemodule 6 wird nun anhand der schematischen Darstellung in Figur 17 erläutert. Zunächst können in einem ersten Schritt das entsprechende Anschlagblech 75, 76 mit Modul-Befestigungsschrauben (Senkkopfschrauben, nicht dargestellt) versehen werden, indem sie von der Rückseite her in den Modul-Anschraubbohrungen 82 angeordnet werden, so dass sie an der Vorderseite hervorstehen. Optional können die Köpfe der Modul-Befestigungsschrauben durch Verkleben in den Modul-Anschraubbohrungen 82 gesichert werden. In einem nächsten Schritt kann das Anschlagblech 75, 76 an der Außenfläche der Fahrzeugwand platziert und gegebenenfalls mit einem Klebstoff, Klebeband oder durch Magnetwirkung fixiert werden. Dabei können optional Anpassungen an die konkrete Fahrzeugkontur vorgenommen werden. In einem nächsten Schritt kann die Fahrzeugwand mit den Fahrzeug-Anschraubbohrungen 83 als Schablone durchbohrt werden. In einem nächsten Schritt können die Gegenbleche 77, 78, 79 an der Innenfläche der Fahrzeugwand derart platziert werden, dass die jeweiligen Anschraub-Gegenbohrung(en) mit der/den zugehörigen Fahrzeug-Anschraubbohrungen 83 fluchtet. Dabei können optional wieder Anpassungen an die konkrete Fahrzeugkontur vorgenommen werden, indem beispielsweise die Anschraublaschen 85 an den Perforationen 81 abgekantet und an jeweilige Fahrzeugholme angelegt werden. In einem nächsten Schritt können die Gegenbleche 77, 78, 79 mittels Blechschrauben (nicht dargestellt) über die Fahrzeug-Anschraubbohrungen 86 mit der Fahrzeugwand verschraubt werden. In einem nächsten Schritt (sofern nicht in einem vorbereitenden Schritt bereits geschehen) können die Mutterbohrungen 89 der Mutterhalter 88 mit den Einpressmuttern (nicht dargestellt) versehen werden. In einem nächsten Schritt (sofern nicht in einem vorbereitenden Schritt bereits geschehen) können die Mutterhalter 88 über die jeweiligen Gegen-Anschraubbohrungen geklappt und optional durch Klebstoff oder durch sonstige Sicherungsmittel gesichert werden. In einem nächsten Schritt können Fahrzeug-Befestigungsschrauben von der Außenseite her durch die Fahrzeug-Anschraubbohrungen 83 geführt und in den Einpressmuttern an den Gegenblechen 77, 78, 79 verschraubt werden. Auch hier kann die Verschraubung optional mit Klebstoff gesichert werden (sofern nicht die Einpressmuttern ohne als Einpress-Sicherungsmuttern ausgebildet sind). In einem nächsten Schritt kann das Haltemodul 6 (hier nicht dargestellt) mit den an der Basis 186 des Tragholms 17 vorgesehenen Anschraubbohrungen 175 (vgl. Figuren 6, 10) auf die von dem jeweiligen Anschlagblech 75, 76 abragenden Modul-Befestigungsschrauben gesetzt und mit Muttern (ggf. Sicherungsmuttern oder mit Klebstoff, Sicherungsscheiben oder durch sonstige Sicherungsmittel gesichert) verschraubt werden.

Es sei bemerkt, dass die genaue Anzahl und Formgebung der oben beschriebenen Elemente eines Montagesatzes 18 an einen bestimmten Fahrzeugtyp angepasst sein kann. Dabei kann ein Montagesatz 18 Elemente für ein einziges Haltemodul 6 oder für mehrere Haltemodule 6 an mehreren Montageorten (etwa vorn, hinten) an einer Fahrzeugwand oder an einem Fahrzeug insgesamt enthalten. Ein Montagesatz 18 für eine linke Fahrzeugseite kann sich von einem Montagesatz 18 für eine rechte Fahrzeugseite unterscheiden. Einzelne Elemente können entfallen oder andere hinzukommen. Beispielsweise kann das Beilagestück 90 zur Überbrückung einer Auskehlung im Blech der Fahrzeugkarosserie verwendet werden. Ein Standard-Montagesatz 18 kann auch mehrere Elemente aufweisen, welche die Montage an einer Vielzahl von Fahrzeugtypen und/oder Montageorte (vorn, hinten, linke Seite, rechte Seite) ermöglichen. Dabei können Elemente enthalten sein, die für bestimmte Fahrzeugtypen oder bestimmte Montageorte nicht benötigt werden.

Zur weiteren Abrundung der Offenbarung werden nun noch beispielhafte Ausführungen von Lagern beschrieben, soweit noch nicht oben geschehen.

Zur Ausbildung des festen Federlagers 30 können in gegenüberliegenden Seitenwänden 101 des Tragholms 17 fluchtende Bohrungen 102 ausgebildet sein, welche eine Achse 103 des festen Federlagers 30 definieren (Figur 20). Eine Anordnung einer zentralen Verbindungsmuffe 105 und zweier seitlicher Verbindungsmuffen 106, die durch einen Gewindestift 107 miteinander verbunden sind, können eine zusammengesetzten Lagerwelle bilden. Ein Gelenkauge (beispielsweise Augenschraube, nicht dargestellt) am Ende der Kolbenstange 31 der Stützfeder 21 kann auf der zentrale Verbindungsmuffe 105 angeordnet sein, und zwei Abstandshalter 108 können auf die seitlichen Verbindungsmuffen 106 geschoben sein und teilweise über die zentrale Verbindungsmuffe 105 überlappen. Die Abstandshalter 108 können beispielsweise aus Kunststoff hergestellt sein und können auch das Gelenkauge zentriert halten. Eine Sicherungsscheibe 109 kann jeweils stirnseitig in den Innenquerschnitt der Abstandshalter 108 eingesetzt sein, um auch ein Verdrehen der Achse, an der die Stützfeder 21 angeordnet ist, zu verhindern. Zur Befestigung dieser Konstruktion können Gewindeschrauben 110 zunächst durch die Bohrungen 102 im Tragholm 17 geführt und dann in Innengewinden 104 der Verbindungsmuffen 106 verschraubt werden. Die Gewindeschrauben 110 können ein Gewinde bis zum Kopf aufweisen. Sofern die Gewindeschrauben 110 einen Schaftabschnitt aufweisen, ist dieser so zu dimensionieren, dass er vor dem Eingriff in die Verbindungsmuffen 106 endet. Die Bohrungen 102 können an den Nenndurchmesser der Gewindeschrauben 110 angepasste Durchgangsbohrungen sein. Dabei kann der Bohrungsdurchmesser eng toleriert sein, um Relativbewegungen zwischen Schraube und Bohrung zu minimieren. Alternativ kann eine der Bohrungen 102 als Gewindebohrung ausgeführt sein, um einerseits die Achse in Drehrichtung sicherer zu fixieren und andererseits eine sichere Klemmung aller Verschraubungen zu gewährleisten.

Zur Ausbildung des unteren festen Lenkerlagers 35 können fluchtende Bohrungen 102 in den Seitenwänden 101 des Tragholms 17 und fluchtenden Passbohrungen 112 in den Seitenwänden 111 des unteren Parallellenkers 20 eine gemeinsame Lagerachse 113 des unteren festen Lenkerlagers 35 definieren (Figur 21). Gleithülsen 114 mit Innengewinde können in die Passbohrungen 112 eingesetzt sein. Zur Montage können Gewindeschrauben 115 von außen zunächst jeweils durch die Bohrungen 102 geführt und die daran anschließende Mutter 116 geschraubt, durch eine Sicherungsscheibe 117 geführt, dann weiter durch die durch Anlaufscheiben 119 und Beilagscheiben 118 flankierte Gleithülse 114 geschraubt und schließlich in eine auf der Innenseite der Seitenwand 111 des unteren Parallellenkers 20 angeordnete Sicherungsmutter 120 geschraubt werden. Anschließend wird die Mutter 116 angezogen, um die Gewindeschraube 115 mit der Seitenwand 101 zu verklemmen. Das untere feste Lenkerlager 35 ist hier somit aus zwei einer jeweiligen Seitenwand zugeordneten Teillagern (also ohne durchgehende Achse) ausgebildet, wobei zwischen den Teillagern ein Zwischenraum verbleibt. Dies ermöglicht es der Kolbenstange 31, zwischen den Seitenwänden 111 des unteren Parallellenkers 20 durchzuschwenken oder verhindert zumindest ein Anschlagen der Kolbenstange 31 an der Lagerachse. Die Gewindeschrauben 115 können ein Gewinde bis zum Kopf aufweisen. Sofern die Gewindeschrauben 115 einen Schaftabschnitt aufweisen, ist dieser so zu dimensionieren, dass er vor dem Eingriff in die Mutter 116 endet. Die Bohrungen 102 können an den Nenndurchmesser der Gewindeschrauben 115 angepasste Durchgangsbohrungen sein. Dabei kann der Bohrungsdurchmesser eng toleriert sein, um Relativbewegungen zwischen Schraube und Bohrung zu minimieren. Alternativ können die Bohrungen 102 als Gewindebohrung ausgeführt sein, um die Achse in Drehrichtung noch sicherer zu fixieren.

Der Aufbau des Achslagers 39 (Figur 22) ist schon oben ausführlich beschrieben worden.

Zur Ausbildung des oberen festen Lenkerlagers 34 können fluchtenden Passbohrungen 137 in den Seitenwänden 101 des Tragholms 17 und fluchtende Gewindebohrungen 148 in den Seitenwänden 139 des oberen Parallellenkers 19 eine gemeinsame Lagerachse 140 des oberen festen Lenkerlagers 34 definieren (Figur 23). Gleithülsen 138 mit Innengewinde können in die Passbohrungen 137 eingesetzt sein. Zur Montage können Gewindeschrauben 190 von außen zunächst jeweils durch die durch Anlaufscheiben 142 flankierte Gleithülse 138 und die Gewindebohrungen 148 in der Seitenwand 139 des oberen Parallellenkers 19 geschraubt werden, um auf der Innenseite der Seitenwand 139 des oberen Parallellenkers 19 in einer Kontermutter 141 zu enden. Anschließend wird die Kontermutter 141 angezogen, um die Gewindeschraube 190 mit der Seitenwand 139 zu verklemmen. Das obere feste Lenkerlager 34 ist hier somit aus zwei einer jeweiligen Seitenwand zugeordneten Teillagern (also ohne durchgehende Achse) ausgebildet, wobei zwischen den Teillagern ein Zwischenraum verbleibt. Dies ermöglicht es dem unteren Parallellenker 20 und dem Schwenkholm 17, zwischen den Seitenwänden 139 des oberen Parallellenkers 19 durchzuschwenken. Die Gewindeschrauben 190 können ein Gewinde bis zum Kopf aufweisen. Sofern die Gewindeschrauben 115 einen Schaftabschnitt aufweisen, ist dieser so kurz zu dimensionieren, dass er vor dem Eingriff in die Gleithülse 138 endet. Es ist denkbar, die Gewindebohrungen 148 durch eng tolerierte Durchgangsbohrungen zu ersetzen, wenn die Kontermutter 141 als Sicherungsmutter ausgeführt ist oder verklebt wird, jedoch ist dann darauf zu achten, dass die Anzugskraft der Kontermutter 141 exakt austariert ist, um einerseits das axiale Spiel wie auch die Klemmung zwischen den Seitenwänden 101, 139 genau einzustellen.

Die Ausbildung der Querriegel 38 (Figuren 24 und 26) ist schon oben ausführlich beschrieben worden.

Zur Ausbildung des freien Federlagers 33 im Schwenkholm 22, das im vorliegenden Ausführungsbeispiel mit dem unteren freien Lenkerlager 37 des unteren Parallellenkers 20 der Parallelgelenkeinheit 15 zusammenfällt, können fluchtenden Passbohrungen 150 in Seitenwänden 111 des unteren Parallellenkers 20 und fluchtende Bohrungen 152 in den Seitenwänden 121 des Schwenkholms 22 eine gemeinsame Lagerachse 153 des freien Federlagers 33 und des unteren freien Lenkerlagers 37 definieren (Figur 25). Gleithülsen 151 mit Innengewinde können in die Passbohrungen 150 eingesetzt sein. Zur Montage können Gewindeschrauben 155 von außen zunächst durch die durch Anlaufscheiben 156 flankierten Gleithülsen 151 geschraubt und durch die Bohrungen 152 geführt werden und dann im Innengewinde einer Verbindungsmuffe 154 verschraubt werden, die hier einteilig ausgeführt ist und sich zwischen den Seitenwänden 111 des unteren Parallellenkers 20 erstreckt. Ein (vorzugsweise gefettetes) Gelenkauge der Stützfeder 21 (nicht dargestellt) kann dabei mittig auf der Verbindungsmuffe 154 sitzen, flankiert von seitlichen Abstandshaltern 157. Die Abstandshalter 157 können innen angefast sein, um Dichtringe 158 aufzunehmen. Die Gewindeschrauben 155 können ein Gewinde bis zum Kopf aufweisen. Sofern die Gewindeschrauben 155 einen Schaftabschnitt aufweisen, ist dieser so kurz zu dimensionieren, dass er vor dem Eingriff in die Gleithülse 151 endet. Die Bohrungen 152 können an den Nenndurchmesser der Gewindeschrauben 155 angepasste Durchgangsbohrungen sein. Dabei kann der Bohrungsdurchmesser eng toleriert sein, um Relativbewegungen zwischen Schraube und Bohrung zu minimieren. Es ist denkbar und vorteilhaft, wenn eine der Bohrungen 102 als Gewindebohrung ausgeführt ist und die Verbindungsmuffe 154 gegen die die Gewindebohrung aufweisende der Seitenwände 121 zu kontern, um die Achse in Drehrichtung noch sicherer zu fixieren und die Klemmung zwischen den Seitenwänden 121, 111 bzw. zwischen der Seitenwand 111 und dem Schraubenkopf zu minimieren.

Zur Ausbildung des oberen freie Lenkerlagers 36 können fluchtenden Passbohrungen 159 in den Seitenwänden 121 des Schwenkholms 22 und fluchtende Bohrungen 161 in den Seitenwänden 139 des oberen Parallellenkers 19 eine gemeinsame Lagerachse 162 des oberen freien Lenkerlagers 36 definieren (Figur 27). Gleithülsen 160 mit Innengewinde können in die Passbohrungen 159 eingesetzt sein. Zur Montage können Gewindeschrauben 164 von außen zunächst jeweils durch die durch Anlaufscheiben 165, 166 flankierte Gleithülse 160 geschraubt, durch eine Beilagscheibe 167 und ein Sicherungsscheibe 168 geführt, dann durch eine Mutter (Kontermutter) 169 geschraubt, durch die Bohrungen 161 geführt und schließlich im Innengewinde einer Verbindungsmuffe 163 verschraubt werden, die sich zwischen den Seitenwänden 121 des Schwenkholms 22 erstreckt, und dann die Kontermuttern 169 beidseitig angezogen werden. Die Gewindeschrauben 164 können ein Gewinde bis zum Kopf aufweisen. Sofern die Gewindeschrauben 164 einen Schaftabschnitt aufweisen, ist dieser so kurz zu dimensionieren, dass er vor dem Eingriff in die Gleithülse 160 endet. Die Bohrungen 161 können an den Nenndurchmesser der Gewindeschrauben 164 angepasste Durchgangsbohrungen sein. Dabei kann der Bohrungsdurchmesser eng toleriert sein, um Relativbewegungen zwischen Schraube und Bohrung zu minimieren. Optional kann eine der Bohrungen 161 als Gewindebohrung ausgeführt sein und die Verbindungsmuffe 163 gegen die die Gewindebohrung aufweisende der Seitenwände 121 gekontert werden, um die Achse in Drehrichtung noch sicherer zu fixieren und Relativbewegungen zwischen Schraube und Bohrung weiter zu minimieren.

Es versteht sich, dass die Dimensionierung und Werkstoffauswahl der Bauteile und Auswahl der Standardbauelemente und Normteile der Transportguthaltevorrichtung 7 vom Fachmann je nach Anforderung ausgewählt wird. Bei einem vom Erfinder entwickelten und getesteten Prototyp sind der Tragholm 17 und der Klapparm 23 aus U-Profilen und sind die Seitenwände der Parallellenker 19, 20 und der Verlängerungsstücke 28, 29 wie auch die Aufdoppelung (Verstärkungsblech) 42 aus Blechen von 3 mm Wandstärke, die Seitenwände des Schwenkholms 22 und des Achslagers 40 aus Blechen von 4 mm Wandstärke hergestellt. Der Tragholm 17 des Prototyps wies eine lichte Weite von 71 mm und eine Länge von etwa 400 mm, der Schwenkholm 22 eine lichte Weite von 40 mm und eine Länge von etwa 275 mm, der Klapparm 23 eine lichte Weite von etwa 83 mm und eine Auflagelänge von etwa 250 mm, die Verlängerungsstücke 28, 29 eine lichte Weite von 30 mm und eine Länge von etwa 300 bzw. 250 mm auf. Die Parallellenker 19, 20 wiesen eine Gelenklänge von Achse zu Achse von etwa 230 mm und einen vertikalen Achsabstand von etwa 95 mm auf. Der obere Parallellenker 19 wies eine lichte Weite von 49 mm, der untere Parallellenker 20 von 64 mm auf. Der Schwenkbereich der Parallelgelenkeinheit 15 reichte von -5° in der Einschwenkstellung bis etwa 165° in der Ausschwenkstellung, jeweils von der oberen Totpunktlage aus in Ausschwenkrichtung gemessen. Es sei nur der Vollständigkeit halber erwähnt, dass die Dimensionierung der Breiten davon ausging, Spanngurte von 25 mm Breite als Zurrmittel verwenden zu können. Dieses Maß bestimmt beispielsweise die lichte Weite zwischen den Stützwänden 123 des Achslagers 40, und davon ausgehend können, abhängig vom Aufbau der jeweiligen Lager, die Weiten und Breiten der weiteren Bauteile 22, 20, 19, 17, 23 dimensioniert werden.

Für die Querriegel 38 des Schwenkholms 22 und die Federlager 30, 33 der Stützfeder 21 wurden jeweils Verbindungsmuffen von 10 mm Außendurchmesser und Gewindeschrauben M6 mit entsprechenden Hilfselementen (Scheiben, Gleithülsen, Muttern), für die Lenkerlager Messing-Gleithülsen von 12 mm Außendurchmesser und Gewindeschrauben M8 mit entsprechenden Hilfselementen verwendet. Verbindungsmuffen können z.B. aus Stahlrohr rund, ggf. verzinkt, oder Edelstahl, mit Innengewinde ausgeführt sein, ggf. als Standardbauteil oder individuell gefertigt. Gewindeschrauben können z.B. als Flachkopfschrauben ISO 7380 mit Innensechskant und angepresster Scheibe (Flanschschrauben), Senkkopfschrauben, Zylinderschrauben oder dergleichen ausgeführt sein. Zur kopfnahen radialen Lastaufnahme in einer Seitenwand vorgesehene Gewindeschrauben (beispielsweise 110, 115, 149) können optional auch als Pass-Schrauben ausgeführt sein, wobei dann die zugehörigen Bohrungen als Passbohrungen mit entsprechender Toleranz auszuführen wären. Pass-Schrauben können z.B. als Ansatzschraube, Schulterschraube, Zylinderschraube DIN 912 mit Innensechskant und aufgeschraubter Passhülse, oder dergleichen ausgeführt sein. Gewindestifte können z.B. gemäß DIN 913 Stahl 45h verzinkt mit Innensechskant ausgeführt sein. Anlaufscheiben können z.B. als Kunststoffscheiben, etwa aus PTFE, POM, ggf. in Composite-Ausführung, oder dergleichen ausgeführt sein und haben sich mit etwa 0,5 bis 1 mm Stärke für die vorliegende Anwendung bewährt. Beilagscheiben können beispielsweise als Edelstahlscheiben mit großem Durchmesser abgestimmt auf Anlaufscheiben ausgewählt sein. Sicherungsscheiben können z.B. als Spannscheibe, Schnorrscheibe, Fächerscheibe, etc. ausgebildet und z.B. Federstahl, ggf. verzinkt, hergestellt sein. Abstandhalter können z.B. aus Kunststoffrohr, ggf. als Standardbauteil, auf Maß abgelängt, hergestellt sein. Sofern die Abstandhalter auch als Anschlag dienen wie etwa im Fall des festen Federlagers 30, können die Abstandhalter auch aus Metall (Stahl, Messing oder dergleichen) oder einem anderen widerstandsfähigeren Material hergestellt sein. Gleithülsen können z.B. aus Messing mit Innengewinde hergestellt sein, eingedrehte Gewindeschrauben zur Schraubensicherung eingeklebt werden. Passbohrungen zur Aufnahme von Gleithülsen, Passhülsen, Schraubenschultern oder dergleichen können gerieben ausgeführt sein. Kontermuttern können z.B. gemäß als Sechskantmuttern DIN 439 B niedrige Form verzinkt ausgeführt sein. Sicherungsmuttern können z.B. als Sechskantmuttern DIN 985 bzw. ISO 10511 niedrige Form, rostfrei A4 mit Polyamidklemmteil ausgeführt sein. Alle oder ausgewählte Verschraubungen können optional verklebt werden.

Für den vorstehenden Prototyp, bei der die Profile des Schwenkholms 22, des Klapparms 23 und der Verlängerungsstücke 28, 29 jeweils 3 mm stark sind, wurde ein Kantenschutzprofil aus EPDM entwickelt, bei dem der kürzere Schenkel 93 beispielsweise eine Länge von 3 mm und eine Stärke von 2,8 mm aufwies und der längere Schenkel beispielsweise ein Länge von 4 mm und eine Stärke von 3,5 mm aufwies. Ein äußerer Übergangsradius (Rundung 95) zwischen den Schenkeln 93, 94 betrug ca. 4 mm, ein Endkantenradius (Rundung 96) an den freien Enden der Schenkel 93, 94 ca. 0,5 mm. Die Werkstoffauswahl und Dimensionierung wie auch konkrete Formgestaltung wird der Fachmann anhand konkreter Lastfälle, individueller Erfordernisse und Gestaltungswünsche anpassen können, ohne den Bereich der Erfindung zu verlassen.

Die Montageeinheit wurde zur Montage an ein Fahrzeug vom Typ VW Crafter MJ2018 gestaltet. Die Bestandteile wurden aus 3mm Stahlblech gefertigt. Als Modulbefestigungsschrauben können Senkkopfschrauben M6 verwendet werden.

Es ist jedoch zu verstehen, dass sämtliche hier genannten Bauart-, Werkstoff- und Dimensionsangaben und Normen sich auf eine beispielhafte, vom Erfinder der vorliegenden Anmeldung hergestellten und funktionsfähigen Ausführungsform handelt, welche den Umfang der vorliegenden Erfindung jedoch nicht weiter einschränkt und welche der Fachmann an konkrete Verhältnisse und Anforderungen anpassen wird, ohne vom Umfang der Erfindung abzuweichen.

Vorstehend wurde die Erfindung anhand von derzeit bevorzugten Ausführungsbeispielen ausführlich und vollständig beschrieben. Durch die Erfindung wird eine seitlich absenkbare bzw. herausschwenkbare Halterung für Transportgut, insbesondere Langgut (Rohre, Profile etc.) zur Montage an einem Kastenwagen bereitgestellt. Durch die Absenkfunktion, unterstützt mit einer Stützfeder (Gasfeder), wird die Halterung auf Kopfhöhe gebracht, dadurch wird der Beladevorgang wesentlich angenehmer und durch die durchdachte Befestigung der Langgutes auch gleich eine hohes Maß an Ladegutsicherung erreicht. Im Gegensatz zu einem Dachträger wird keine Leiter etc. benötigt und die Unfallgefahr merklich gesenkt. Die Halterung ist bei geringer Last durch eine Person bedienbar, bei schwerer Last können zwei Personen erforderlich sein. Die gesamte Transportguthaltevorrichtung besteht aus zwei Grundbestandteilen: 1. Dem Anschlagblech, das direkt am Fahrzeug großflächig verklebt und zweimal mit Gegenmuttern in die Karosserie im Dachbereich verschraubt wird, um die entstehenden Kräfte über das Fahrzeug gleichmäßig ableiten zu können, und 2. Dem Haltemodul selbst, das eine Absenkmechanik verwirklicht und mit vier Schrauben an dem Anschlagblech befestigt wird. Das Haltemodul besteht aus der Trägereinheit, die der Anbringung an dem Anschlagblech am Fahrzeug befestigt wird, der Transportgutaufnahmeeinheit, die der Aufnahme des Ladeguts dient, und einer Parallelgelenkeinheit (Parallellenker) mit vier Gelenken der, die den Hebe- und Senkvorgang exakt führt. Beim Absenken wird die Transportgutaufnahme etwas vom Fahrzeug entfernt so dass sie einfach und ohne das Fahrzeug zu beschädigen beladen werden kann. Zudem kann die Ladung deshalb sehr einfach fixiert/niedergespannt werden. Beim Anheben wird die Ladung nach oben und zum Fahrzeug hin bewegt und dort verankert. Hierdurch werden die gesetzlichen Anforderungen an die Gesamtfahrzeugbreite eingehalten und wird ein problemloses Öffnen der Fahrzeugtüren gewährleistet. Durch die großflächige Anlage an der Fahrzeugwand kann eine hohe Kraftaufnahme bzw. Krafteinleitung in Fahrzeugbewegungsrichtung ermöglicht.

Die Anzahl der Haltemodule 6 je Transportguthaltevorrichtung 7 ist nicht auf zwei je Fahrzeugwand beschränkt. Es können mehr Haltemodule 6 vorgesehen sein, um besonders fragilen Langgütern mehr Stützstellen zu vermitteln oder um auch Transportgüter zu transportieren, die kürzer als ein Abstand zwischen zwei weit entfernten Haltemodulen 6 sind.

Umgekehrt kann auch ein einziges Haltemodul 6 eine Transportguthaltevorrichtung 7 im Sinne der Erfindung bilden. In einem solchen Fall kann das einzige Haltemodul 6 beispielsweise in der Mitte einer Seitenwand 8 in Längsrichtung 3 gesehen angeordnet werden. Längeres Transportgut 2 sollte im Wesentlichen mittig, jedenfalls einigermaßen ausbalanciert auf dem Klapparm 23 angeordnet werden. Gegebenenfalls kann am Klapparm eine Querverlängerung vorgesehen werden, welche die Auflagelänge vergrößert. Ferner kann längeres Transportgut 2 nach Anheben in die Transportstellung an seinen Längsenden am Fahrzeug 1 verzurrt werden, um es zum Transport zu stabilisieren.

In Abwandlung von dem zuvor beschriebenen Ausführungsbeispiel können die Montageplatten so gestaltet sein oder ergänzt werden, dass sie an einer Dachreling oder Dachrinne des Fahrzeugs 1 eingehakt werden und mit der Fahrzeugwand nur verklebt oder verschweißt oder magnetisch verbunden werden.

Anstelle einer Gasfeder kann auch eine Schraubenfeder oder ein Hydraulikzylinder als Stützfeder 21 verwendet werden. Mit einem Hydraulikzylinder kann auch ein automatischer Hub- und Senkvorgang durchführbar sein.

Die vorstehend beschriebenen Ausführungsbeispiele und ihre Varianten und Abwandlungen sind als beispielhafte Erläuterung, nicht als Einschränkung der Erfindung zu verstehen. Ferner ist die Anwendung des Haltemoduls bzw. der Transportguthaltevorrichtung nicht nur an Kraftfahrzeugen, sondern auch an anderen Fahrzeugen, insbesondere Booten oder Schiffen, wie auch in ganz anderen Zusammenhängen wie etwa an oder in Gebäuden oder dergleichen möglich (das Transportgut wird in solchen Fällen allgemein als Lagergut zu betrachten sein).

Ein weiteres Ausführungsbeispiel wird im Folgenden beschrieben. Gleiche Teile besitzen gleiche Bezugszeichen, wie in den vorherigen Ausführungsbeispielen. Außerdem gelten die obigen Erläuterungen gleichermaßen für die Teile des weiteren Ausführungsbeispiels.

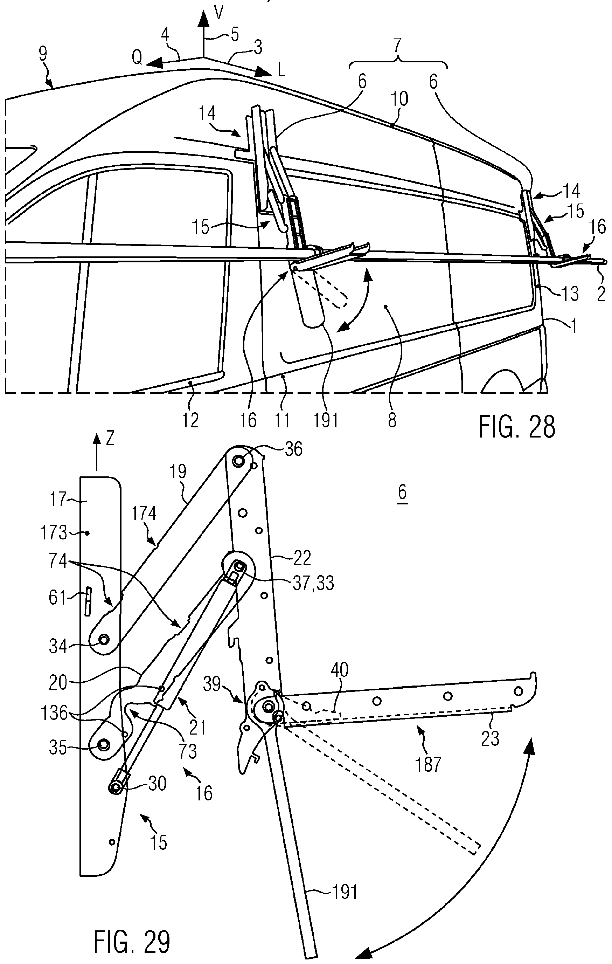

Das weitere Ausführungsbeispiel unterscheidet sich von den vorherigen Ausführungsbeispielen dadurch, dass das Haltemodul 6 einen zusätzlichen Greifbügel 191 aufweist. Der Greifbügel 191 dient zum Bewegen der Transportgutaufnahmeeinheit 16 von der Transportstellung in die Ladestellung (Figur 28 und 29).

Das Haltemodul 6 weist eine Trägereinheit 14, eine Parallelgelenkeinheit 15, eine Transportgutaufnahmeeinheit 16 und einen Greifbügel 191 auf.

Die Trägereinheit 14 weist als wesentliche konstruktive Struktur einen Tragholm 17 auf. Der Tragholm 17 kann einen U-förmigen Querschnitt aufweisen, dessen Basis zur Fahrzeugseitenwand 8 weist. Der Tragholm 17 kann mit Hilfe eines Montagesatzes 18 am Fahrzeug 1 angebracht sein.

Die Parallelgelenkeinheit 15 weist einen oberen Parallellenker 19 und einen unteren Parallellenker 20 auf, die mit jeweiligen ersten Enden in einigem Abstand voneinander an dem Tragholm 17 der Trägereinheit 14 drehbar gelagert sind. Die Parallelgelenkeinheit 15 kann ferner eine Stützfeder 21 aufweisen, die ebenfalls drehbar an dem Tragholm 17 gelagert ist. Die Transportgutaufnahmeeinheit 16 kann einen Schwenkholm 22 aufweisen, an welchem die jeweils zweiten, freien Enden der Parallellenker 19, 20 der Parallelgelenkeinheit 15 in gleichem Abstand wie an dem Tragholm 17 drehbar gelagert sind. Der Schwenkholm 22 kann somit parallel zu dem Tragholm 17 zwischen einer oberen Endlage und einer unteren Endlage schwenken.

Die Transportgutaufnahmeeinheit 16 kann einen Klapparm 23 aufweisen, der an dem Schwenkholm 22 drehbar zwischen einer Einklappstellung und einer Ausklappstellung gelagert ist. Der Klapparm 23 kann in der Ausklappstellung eine Auflage für das Transportgut 2 bilden.

Der Klapparm 23 kann einen U-förmigen Querschnitt aufweisen, dessen Kanten in der Ausklappstellung nach oben weisen und der durch eine Basis 187 und zwei Seitenwände 188 gebildet wird. Die Anlenkung des Klapparms 23 an dem Schwenkholm 22 der Transportgutaufnahmeeinheit 16 kann über ein Achslager 39 erfolgen.

Der Greifbügel 191 ist mittels eines Verbinders mit dem Klapparm 23 verbunden. Der Verbinder kann beispielsweise eine Schraube oder ein Bolzen sein.

Der Greifbügel 191 ist u-förmig ausgebildet, wobei die offenen Enden des Greifbügels 191 seitlich am Klapparm 23 und auf Höhe des Achslagers 39 angebracht sind.

Befindet sich der Klapparm 23 in der Ausklappstellung, dann weist der Greifbügel 191 im Wesentlichen zwei mögliche Stellungen auf. In einem ausgeklappten Zustand ist der Greifbügel 191 senkrecht zum Klapparm 23 und bildet eine Verlängerung des Schwenkholms 22. In einem eingeklappten Zustand ist der Greifbügel 191 parallel zum Klapparm 23 an diesem anliegend und ist senkrecht zum Schwenkholm 22 angeordnet.

Vorzugsweise weist der Greifbügel 191 am Verbinder ein Rastmittel auf, sodass der Greifbügel 191 im ausgeklappten Zustand und/oder im eingeklappten Zustand fixiert ist.

Jeglicher weitere Zustand des Greifbügels 191 zwischen dem ausgeklappten Zustand und dem eingeklappten Zustand ist ebenfalls möglich. Es ist auch möglich, den Greifbügel 191 über den ausgeklappten Zustand hinaus weiter zu bewegen.

Mit dem Greifbügel 191 im ausgeklappten Zustand ist es durch eine Zugbewegung oder eine Druckbewegung einfach möglich, die Transportgutaufnahmeeinheit 16 in die Ladestellung oder in die Transportstellung über den oberen Totpunkt der Transportgutaufnahmeeinheit 16 hinaus zu bewegen. Dies ist auch möglich, wenn das Haltemodul 6 über Kopfhöhe der bedienenden Person montiert ist. Hierdurch wird die Betätigung des Haltemoduls vereinfacht.

### Bezugszeichenliste

- 1: Fahrzeug
- 2: Transportgut
- 3: Fahrzeuglängsrichtung (L)
- 4: Fahrzeugquerrichtung (Q)
- 5: Vertikale Richtung (V)
- 6: Haltemodul
- 7: Transportguthaltevorrichtung
- 8: Fahrzeugseitenwand
- 9: Fahrzeugdach
- 10: Dachkante
- 11: B-Säule
- 12: Fahrzeugtür
- 13: Endsäule (C-oder D-Säule)
- 14: Trägereinheit
- 15: Parallelgelenkeinheit
- 16: Transportgutaufnahmeeinheit
- 17: Tragholm
- 18: Montagesatz
- 19,20: Parallellenker (oben, unten)
- 21: Stützfeder
- 22: Schwenkholm
- 23: Klapparm
- 24: Kantenschutzprofil
- 25: Belegungsmittel (Schlitz)
- 26: Zurrmittel
- 27: Entriegelungsschieber
- 28,29: Verlängerungsstück
- 30: Federlager (fest, kolbenseitig)
- 31: Kolbenstange
- 32: Zylinder
- 33: Federlager (frei, zylinderseitig)
- 34,35: festes Lenkerlager (oben, unten)
- 36,37: freies Lenkerlager (oben, unten)
- 38: Belegungsmittel (Querriegel)
- 39: Achslager
- 40: Achsaufnahme
- 41: Schweißschlitze für Achsaufnahme
- 42: Verstärkungsblech
- 43: Ausklinkung (Rundkerbe)
- 44: Sicherungsfeder
- 45: Anschlagelement
- 46,47: Endanschlag (Rundkerbe oben, unten)
- 48: Rasthebel
- 49: Hebellager
- 50: Zugfeder
- 51: Haken
- 52: Öse
- 53: Rastarm
- 54: Bahn
- 55: Raststufe
- 56: Greiffläche
- 57: Schweißlasche
- 58: Handhabe
- 59: Verbindungslasche
- 60: Anschlussende
- 61: Riegel
- 62: Führungsschlitz
- 63: Spannfeder
- 64: Rastschlitz
- 65: Riegelverbinder
- 66: Entriegelungsrichtung
- 67: Führungspin
- 68: Langloch
- 69: Blickrichtung (Transportgut-Beladungsrichtung) (x)
- 70: Querrichtung (Tragholm-Breitenrichtung, Transportgut-Längsrichtung) (y)
- 71: Hubrichtung (Tragholm-Längsrichtung, Transportgut-Auflagerichtung) (z)
- 72: Stützfederachse
- 73: Auskehlung (Endanschlag)
- 74: Ausnehmung
- 75,76: Anschlagblech (vorn, hinten)
- 77,78: Gegenblech oben (vorn, hinten)
- 79: Gegenblech unten
- 80: Sicke
- 81: Perforation
- 82: Modul-Anschraubbohrung
- 83: Fahrzeug-Anschraubbohrung
- 84: Grundplatte
- 85: Anschraublasche
- 86: Fahrzeug-Anschraubbohrung
- 87: Anschraub-Gegenbohrung
- 88: Mutterhalter
- 89: Mutterbohrung
- 90: Beilagestück
- 91: Auskehlung
- 92: Handhabe
- 93,94: Schenkel
- 95: Rundung
- 96: Rundung
- 97: Abwinklung
- 98: Auskehlung
- 99: Querriegel
- 100: Splintstift
- 101: Seitenwand (Tragholm 17)
- 102: Bohrung
- 103: Achse
- 104: Innengewinde
- 105: Zentrale Verbindungsmuffe
- 106: Seitliche Verbindungsmuffe
- 107: Gewindestift
- 108: Abstandhalter
- 109: Sicherungsscheibe
- 110: Gewindeschraube
- 111: Seitenwand (unterer Parallellenker 20)
- 112: Bohrung (gerieben)
- 113: Achse
- 114: Gleithülse
- 115: Gewindeschraube
- 116: Mutter
- 117: Sicherungsscheibe
- 118: Beilagscheibe (beidseitig)
- 119: Anlaufscheibe (beidseitig)
- 120: Sicherungsmutter
- 121: Seitenwand (Schwenkholm 22)
- 122: Gewindebohrung
- 123: Stützwand (Achsaufnahme 40)
- 124: Bohrung (gerieben)
- 125: Achse
- 126: Gleithülse
- 127: Gewindeschraube
- 128: Anlaufscheibe
- 129: Anlaufscheibe (doppelt)
- 130: Bohrung
- 131: Achse
- 132: Verbindungsmuffe
- 133: Gewindeschraube
- 134: Bohrung
- 135: Bohrung
- 136: Spannstift
- 137: Bohrung (gerieben)
- 138: Gleithülse
- 139: Seitenwand (oberer Parallellenker 19)
- 140: Achse
- 141: Kontermutter
- 142: Anlaufscheibe (beidseitig)
- 143: Senkbohrung
- 144: Achse
- 145: Verbindungsmuffe
- 146: Gewindeschraube
- 147: Bohrung
- 148: Bohrung
- 149: Gewindeschraube
- 150: Bohrung (gerieben)
- 151: Gleithülse
- 152: Bohrung
- 153: Achse
- 154: Verbindungsmuffe
- 155: Gewindeschraube
- 156: Anlaufscheibe (beidseitig)
- 157: Abstandhalter
- 158: Dichtring (z.B. O-Ring)
- 159: Bohrung (gerieben)
- 160: Gleithülse
- 161: Bohrung
- 162: Achse
- 163: Verbindungsmuffe
- 164: Gewindeschraube
- 165: Anlaufscheibe
- 166: Anlaufscheibe
- 167: Beilagscheibe
- 168: Sicherungsscheibe
- 169: Kontermutter
- 170: Querriegel
- 171: Eindellung
- 172: Federbefestigungsloch
- 173: Stift
- 174: Ausklinkung
- 175: Anschraubbohrung
- 176: Vorsprung
- 177: Anlagefläche
- 178: Haken
- 179: Außenfläche (Anlagefläche)
- 180: Abstufung
- 181: Sporn
- 182: Anlagefläche
- 183: Anlagefläche
- 184: Vorsprung
- 185: Anlagefläche (unterer Parallellenker 20 und Verstärkungsblech 42)
- 186: Basis (Tragholm 17)
- 187: Basis (Klapparm 23)
- 188: Seitenwand (Klapparm 23)
- 189: Verbindungssteg
- 190: Gewindeschraube
- 191: Greifbügel

Die vorstehende Liste der Bezugszeichen ist integraler Bestandteil der Beschreibung.

## Patentansprüche

1. Absenkbare Transportguthaltevorrichtung (7) für ein Fahrzeug (1), wobei die Transportguthaltevorrichtung (7) wenigstens ein Haltemodul (6) aufweist, wobei das Haltemodul (6) aufweist:
- eine Transportgutaufnahmeeinheit (16) mit Aufnahme- und/oder Befestigungsmitteln für ein Transportgut (2),
- eine Trägereinheit (14), die an einem Fahrzeug (1) angebracht oder anbringbar ist, und
- eine Parallelgelenkeinheit (15) mit parallelen Parallellenkern (19, 20), die an einem Tragholm (17) der Trägereinheit (14) in festen Lenkerlagern (34, 35) und an einem Schwenkholm (22) der Transportgutaufnahmeeinheit (16) in freien Lenkerlagern (36, 37) parallel zueinander derart drehbar gelagert sind, dass die Transportgutaufnahmeeinheit (16) gegenüber der Trägereinheit (14) zwischen einer Einschwenkstellung und einer Ausschwenkstellung schwenkbar ist,
**dadurch gekennzeichnet,**
**dass** die Trägereinheit (14) zur seitlichen Anbringung am Fahrzeug (1) ausgebildet ist und die Transportgutaufnahmeeinheit (16) einen Klapparm (23) aufweist, der an dem Schwenkholm (22) derart gelagert ist, dass der Klapparm (23) zwischen einer Einklappstellung, in welcher sich der Klapparm (23) parallel oder im Wesentlichen parallel zu dem Schwenkholm (22) erstreckt, und einer Ausklappstellung, in welcher der Klapparm (23) zur Aufnahme des Transportguts (2) rechtwinklig oder im Wesentlichen rechtwinklig von dem Schwenkholm (22) abragt, bewegbar ist.

2. Transportguthaltevorrichtung (7) nach Anspruch 1,
**dadurch gekennzeichnet,**
**dass** der Klapparm (23) in der Einklappstellung den Schwenkholm (22), die Trägereinheit (14) und die Parallelgelenkeinheit (15) in Breitenrichtung (70) vollständig und in Längsrichtung (71) wenigstens teilweise verdeckt, und/oder
**dass** ein Greifbügel (191) schwenkbar am Klapparm (23) befestigt ist, so dass mittels des ausgeschwenkten Greifbügels (191) die Transportguthaltevorrichtung (7) betätigbar ist.

3. Transportguthaltevorrichtung (7) nach Anspruch 1 oder 2,
**dadurch gekennzeichnet,**
**dass** der Klapparm (23) einen wenigstens abschnittweise U-förmigen Querschnitt aufweist, der eine größere lichte Weite als eine äußere Abmessung des Schwenkholms (22) und des Tragholms (17) mit Parallelgelenkeinheit (15) in Querrichtung (70) aufweist und dessen freie Schenkel (93, 94) in der Einklappstellung zu dem Tragholm (17) weisen, wobei der Klapparm (23) insbesondere aus einem aus einem U-Profil hergestellt ist.

4. Transportguthaltevorrichtung (7) nach einem der vorstehenden Ansprüche,
**dadurch gekennzeichnet,**
**dass** der Tragholm (17) einen U-förmigen Querschnitt aufweist, dessen Basis eine Fahrzeugseite des Tragholms (17) definiert, und dessen freie Schenkel Seitenwände (101) bilden, welche die festen Lenkerlager (34, 35) und das feste Federlager (30) aufnehmen.

5. Transportguthaltevorrichtung (7) nach einem der vorstehenden Ansprüche,
**dadurch gekennzeichnet,**
**dass** der Schwenkholm (22) zwei Seitenwände (121) aufweist, die durch Profile oder Bleche gebildet sind und die durch Querverbindungselemente, insbesondere Querriegel, die durch mit den Seitenwänden (121) verschraubte Verbindungsmuffen gebildet sind, miteinander verbunden sind, wobei die Querverbindungselemente vorzugsweise als Festlegemittel zum Festlegen eines Transportguts (2) ausgebildet sind.

6. Transportguthaltevorrichtung (7) nach einem der vorstehenden Ansprüche,
**dadurch gekennzeichnet,**
**dass** die Parallellenker (19, 20) Seitenwände (139, 111) aufweisen, die durch Profile oder Bleche gebildet sind, die in den festen Lenkerlagern (34, 35) an den Seitenwänden (101) des Tragholms (17) angebunden sind und die in den freien Lenkerlagern (36, 37) an den Seitenwänden (121) des Schwenkholms (22) angebunden sind.

7. Transportguthaltevorrichtung (7) nach einem der vorstehenden Ansprüche,
**dadurch gekennzeichnet,**
**dass** Kanten des Klapparms (23) und/oder des Schwenkholms (22) mit einem elastischen oder weichen Schutzelement, beispielsweise einem Kantenschutzprofil (24), versehen sind

8. Transportguthaltevorrichtung (7) nach einem der vorstehenden Ansprüche,
**dadurch gekennzeichnet,**
**dass** der Klapparm (23) Festlegemittel aufweist, die zum Festlegen eines Transportguts (2) ausgebildet sind, wobei die Festlegemittel Schlitze oder Bohrungen oder anders geformte Ausnehmungen in Profilwänden oder Beschläge wie etwa Querriegel, Haken oder Poller (Stehbolzen mit Kopf) umfassen.

9. Transportguthaltevorrichtung (7) nach einem der vorstehenden Ansprüche,
**dadurch gekennzeichnet,**
**dass** Ausklappsicherungsmittel (38, 44) vorgesehen sind, die den Klapparm (23) in der Einklappstellung sichern.

10. Transportguthaltevorrichtung (7) nach einem der vorstehenden Ansprüche,
**dadurch gekennzeichnet,**
**dass** Einklappsicherungsmittel (48) vorgesehen sind, die den Klapparm (23) in der Ausklappstellung sichern.

11. Transportguthaltevorrichtung (7) nach einem der vorstehenden Ansprüche,
**dadurch gekennzeichnet,**
**dass** Ausschwenksicherungsmittel vorgesehen sind, welche die Transportgutaufnahmeeinheit (16) in der Einschwenkstellung sichern.

12. Transportguthaltevorrichtung (7) nach einem der vorstehenden Ansprüche,
**dadurch gekennzeichnet,**
**dass** eine Stützfeder (21) vorgesehen ist, welche sich zwischen einem festen Federlager (30) am Tragholm (17) und einem mitschwenkenden oder freien Federlager (33) am Schwenkholm (22) erstreckt und welches zwischen dem Tragholm (17) und dem Schwenkholm (22) eine Federkraft ausübt, um eine Hubbewegung der Transportgutaufnahmeeinheit (16) zu unterstützen, wobei die Stützfeder (21) vorzugsweise eine Gasfeder sein, die insbesondere drückend wirkt.

13. Transportguthaltevorrichtung (7) nach Anspruch 12,
**dadurch gekennzeichnet,**
**dass** das freie Federlager (33) koaxial mit dem unteren freien Lenkerlager (37) am Schwenkholm (22) angeordnet ist, wobei das feste Federlager (30) vorzugsweise unterhalb des unteren festen Lenkerlagers (35) am Tragholm (17) angeordnet ist.

14. Transportguthaltevorrichtung (7) nach einem der vorstehenden Ansprüche,
**dadurch gekennzeichnet,**
**dass** die Parallellenker (19, 20) in der Einschwenkstellung von den festen Gelenklagern (34, 35) aus nach oben und zum Fahrzeug (1) oder zu einer Fahrzeugseite des Tragholms (17) hin weisen.

15. Transportguthaltevorrichtung (7) nach einem der vorstehenden Ansprüche,
**dadurch gekennzeichnet,**
**dass** zwei Haltemodule (6) zur gemeinsamen Aufnahme eines langgestreckten Ladeguts (2) vorgesehen sind, die unabhängig voneinander schwenkbar sind.

## Claims

1. lowerable transport goods holding device (7) for a vehicle (1), the transport goods holding device having at least one (7) has at least one retaining module (6), wherein the retaining module (6) has
- a transport material receiving unit (16) with receiving and/or fastening means for a transport item (2), - a carrier unit (14) which is attached or attachable to a vehicle (1), and
- a parallel joint unit (15) with parallel parallel parallel cores (19, 20) which can be attached to a (17) of the carrier unit (14) in fixed guide bearings (34, 35) and on a pivoting spar (22) of the transport material receiving unit (16) in free guide bearings (36, 37) parallel to one another in such a way that the transport material receiving unit (16) is pivotable relative to the carrier unit (14) between a swivel-in position and a swivel-out position. swivel-out position, **characterised in**
**that** the carrier unit (14) is designed for lateral attachment to the vehicle (1) and the transport material receiving unit (16) has a folding arm (23), which is (22) in such a way that the folding arm (23) can be moved between a folded-in position in which the position, in which the folding arm (23) is parallel or substantially parallel to the parallel to the swivel spar (22), and a folded-out position in which the folding arm (23) extends parallel to the swivel spar (22).
arm (23) for receiving the goods (2) to be transported extends at right angles or substantially at right angles at right angles or substantially at right angles from the swivelling spar (22).

2. Transport goods holding device (7) according to claim 1, **characterised in**
**that** the folding arm (23), in the folding position, connects the swivelling spar (22), the carrier unit (14) and the (14) and the parallel joint unit (15) in the width direction (70) and in the longitudinal direction (71). at least partially in the longitudinal direction (71), and/or
in that a gripping bow (191) is pivotably fastened to the folding arm (23), so that by means of (191) can be actuated by means of the swung-out gripping bracket (191). by means of the swung-out gripping bracket (191).

3. Transport material holding device (7) according to claim 1 or 2, **characterised in that in that** the folding arm (23) has a cross-section which is U-shaped at least in sections and which has a larger clear which has a greater clear width than an outer dimension of the swivelling spar (22) and of the supporting spar (22). (22) and of the supporting spar (17) with parallel joint unit (15) in the transverse direction (70) and the free legs (93, 94) of which are directed towards the supporting spar (17) in the folded-in position the folding arm (23) being made in particular from a U-profile.

4. transport goods holding device (7) according to one of the preceding claims, **characterized in that** the supporting spar (17) has a U-shaped cross-section, the base of which has a driving side of the supporting spar (17). side of the support beam (17), and the free legs of which form side walls (101) which receive the fixed link bearings (34, 35) and the fixed spring bearing(30).

5. transport goods holding device (7) according to one of the preceding claims,
**characterized in that** the swivel bar (22) has two side walls (121) which are formed by profiles or
sheets and which are connected by transverse connecting elements, in particular transverse bars, which are formed by connecting sleeves screwed to the side walls (121),
the side walls (121), the cross-connection elements preferably being used as means for securing a transport item (2).

6. transport goods holding device (7) according to one of the preceding claims,
**characterized in that** the parallel guide members (19, 20) have side walls (139, 111) which are formed by sections or sheets which are mounted in the fixed guide bearings (34, 35) on the side walls (101) of the supporting beam (17) and which are connected in the free control arm bearings (36, 37) to the side walls (121) of the swivel spar (22).

7. transport goods holding device (7) according to one of the preceding claims, **characterized in that** edges of the folding arm (23) and/or of the pivoting spar (22) are provided with an elastic or soft protective element. protective element, for example an edge protection profile (24)

8. Transport goods holding device (7) according to one of the preceding claims,
**characterised in that** the folding arm (23) has securing means which are designed for securing a transport item (2), the fixing means comprising slots or bores or otherwise shaped recesses in profiled walls. shaped recesses in profile walls or fittings such as crossbars, hooks or bollards (studs), or bollards (studs with heads).

9. transport goods holding device (7) according to one of the preceding claims, **characterized in that** unfolding securing means are provided which secure the folding arm (23) in the folding folding position.

10. transport goods holding device (7) according to one of the preceding claims,
**characterised in that** means are provided which secure the folding arm (23) in the unfolded position.

11. transport goods holding device (7) according to one of the preceding claims,
**characterised in that** swing-out securing means are provided which secure the transport material receiving unit (16) in the swivel-in position.

12. transport goods holding device (7) according to one of the preceding claims,
**characterised in that** a support spring (21) is provided, which is located between a fixed spring bearing (30) on the support spar (17) and the support spring (21). (30) on the supporting spar (17) and a co-swinging or free spring bearing (33) on the pivoting spar (22) and which between the supporting spar (17) and the and the swivelling spar (22) in order to support a lifting movement of the transport unit (16), wherein the support spring (21) is preferably a gas spring which is in preferably a gas spring, which acts in particular in a pressing manner.

13. transport material holding device (7) according to claim 12, **characterized in that** the free spring bearing (33) is arranged coaxially with the lower free link bearing (37) on the swivelling bar (22). (22), the fixed spring bearing (30) preferably being arranged below the lower below the lower fixed control arm bearing (35) on the supporting spar (17).

14. transport goods holding device (7) according to one of the preceding claims, **characterized in that**, in the swivel-in position, the parallel guide rods (19, 20) are arranged upwards from the fixed link bearings (34, 35) upwards and towards the vehicle (1) or towards a vehicle side of the supporting beam (17). side of the support beam (17).

15. Transport goods holding device (7) according to one of the preceding claims, **characterised in that** two holding modules (6) are provided for jointly receiving an elongated load (2) are provided, which can be pivoted independently of one another.

## Revendications

1. Dispositif de maintien de marchandises transportées (7) abaissable pour un véhicule (1), le dispositif de maintien de marchandises transportées comportant un module de maintien de marchandises transportées (7).
dispositif de retenue de marchandises (7) comporte au moins un module de retenue (6), le module de retenue (6) comprend :
- une unité de réception de marchandises à transporter (16) avec des moyens de réception et/ou de fixation pour un produit à transporter (2),
- une unité de support (14), qui est montée ou peut être montée sur un véhicule (1), et
- une unité d'articulation parallèle (15) avec des noyaux parallèles (19, 20) qui sont fixés à une longeron porteur (17) de l'unité de support (14) dans des paliers de bras fixes (34, 35) et sur un longeron pivotant (22) de l'unité de réception des marchandises à transporter (16) dans des paliers de bras libres (36, 37) sont montés de manière à pouvoir tourner parallèlement l'un à l'autre, de telle sorte que l'unité de réception de la marchandise à transporter (16) par rapport à l'unité de support (14) entre une position de pivotement vers l'intérieur et une position de pivotement vers l'extérieur,
**caractérisé en ce que**
l'unité de support (14) est conçue pour être montée latéralement sur le véhicule (1) et l'unité de réception de marchandises à transporter (16) présente un bras rabattable (23) qui est monté sur le support de transport (16).
(22) de manière à ce que le bras rabattable (23) puisse être déplacé entre une position de rangement et une position de transport.
position de rabattement dans laquelle le bras rabattable (23) s'étend parallèlement ou sensiblement parallèlement à l'axe du chariot.
au longeron pivotant (22), et une position de déploiement dans laquelle le bras rabattable (23) de réception de la marchandise (2) à angle droit ou sensiblement à angle droit.
par rapport au montant pivotant (22).

2. Dispositif de maintien des marchandises à transporter (7) selon la revendication 1, **caractérisé en ce que**
le bras rabattable (23), dans la position de rabattement, soutient le longeron pivotant (22), l'unité de support et l'unité de transport.
(14) et l'unité d'articulation parallèle (15) dans le sens de la largeur (70) et complètement dans le sens de l'inclinaison (30). recouvre au moins partiellement dans le sens de la longueur (71), et/ou **en ce qu'**un étrier de préhension (191) est fixé de manière pivotante sur le bras rabattable (23), de sorte qu'au moyen de l'étrier de préhension (191) pivoté vers l'extérieur, le 353 cd dispositif de maintien des marchandises transportées (7) peut être actionné est possible.

3. Dispositif de maintien des marchandises transportées (7) selon la revendication 1 ou 2, aractérisé en ce que e bras rabattable (23) présente une section transversale en forme de U, au oins par tronçons.
ui présente une largeur intérieure plus grande qu'une dimension extérieure du longeron pivotant (22) et du longeron porteur (17) avec l'unité d'articulation parallèle (15) dans la direction transversale (70). et dont les branches libres (93, 94) sont dirigées vers le longeron porteur (17) dans la position repliée. Le bras rabattable (23) est notamment fabriqué à partir d'un profilé en U.

4. Dispositif de support de marchandises (7) selon l'une des revendications précédentes, **caractérisé en ce que** le longeron de support (17) présente une section transversale en forme de U dont la base est un côté de conduite du longeron (17) et dont les branches libres définissent des parois latérales (101). qui forment les paliers de bras fixes (34, 35) et le palier de ressort fixe (30).

5. Dispositif de support de marchandises transportées (7) selon l'une des revendications précédentes, **caractérisé en ce que**
le longeron pivotant (22) comporte deux parois latérales (121) formées par des profilés ou des tôles et qui sont reliées par des éléments de liaison transversaux, notamment des traverses, qui sont formés par des manchons de liaison vissés aux parois latérales (121),
les éléments de liaison transversaux étant de préférence utilisés comme des moyens de fixation pour fixer un produit à transporter (2).

6. Dispositif de maintien de marchandises transportées (7) selon l'une des revendications précédentes, **caractérisé en ce que** les bras parallèles (19, 20) présentent des parois latérales (139, 111) qui sont formées par des profilés ou tôles formées dans les paliers de bras fixes (34, 35) sur les parois latérales (101) du longeron de support (17) et qui, dans les paliers libres (36, 37) du bras oscillant sont reliés aux parois latérales (121) du longeron pivotant (22).

7. Dispositif de support de marchandises transportées (7) selon l'une des revendications précédentes, **caractérisé en ce que** les bords du bras rabattable (23) et/ou du longeron pivotant (22) sont munis d'un élément de protection élastique.
de protection souple ou élastique, par exemple un profilé de protection d'arête (24). sont prévus.

8. Dispositif de maintien de marchandises à transporter (7) selon l'une des revendications précédentes, **caractérisé en ce que**
le bras rabattable (23) présente des moyens d'immobilisation qui sont destinés à immobiliser un produit à transporter. (2), les moyens de fixation étant constitués de fentes ou de perçages ou de trous de forme différente.
dans des parois profilées ou des ferrures telles que des verrous transversaux, des crochets, etc. ou des bornes (goujons avec tête).

9. Dispositif de maintien des marchandises transportées (7) selon l'une des revendications précédentes, **caractérisé en ce qu'**il est prévu des moyens de blocage du dépliage qui bloquent le bras rabattable (23) en position repliée.

10. Dispositif de maintien des marchandises transportées (7) selon l'une des revendications précédentes, **caractérisé en ce qu'**il est prévu des moyens de sécurité contre le rabattement qui bloquent le bras rabattable (23) dans la position déployée.

11. Dispositif de maintien de marchandises transportées (7) selon l'une des revendications précédentes, **caractérisé en ce qu'**il est prévu des moyens de sécurité contre le pivotement qui empêchent l'unité de réception de marchandises de pivoter. (16) dans la position de pivotement.

12. Dispositif de maintien des marchandises transportées (7) selon l'une des revendications précédentes, **caractérisé en ce qu'**il est prévu un ressort d'appui (21) qui s'étend entre un palier de ressort fixe (22) et un palier de ressort mobile (24). (30) sur le longeron porteur (17) et un palier à ressort (33) pivotant ou libre sur le bras de 1 evage (10).
longeron pivotant (22) et qui s'étend entre le longeron porteur (17) et le longeron pivotant (22). (22), afin de permettre un mouvement de levage de l'unité de réception de marchandises. L'unité de réception (16) est soutenue par un ressort d'appui (21) qui est de préférence un ressort à gaz. qui agit en particulier par pression.

13. Dispositif de maintien des marchandises transportées (7) selon la revendication 12, **caractérisé en ce que** le palier de ressort libre (33) est coaxial avec le palier de bras libre inférieur (37) sur le chariot de transport.
(22), le palier à ressort fixe (30) étant de préférence disposé en dessous de l'axe de pivotement (22). du palier fixe inférieur (35) du bras oscillant sur le longeron (17).

14. Dispositif de support de marchandises à transporter (7) selon l'une des revendications précédentes, **caractérisé en ce que** les bras parallèles (19, 20), dans la position de pivotement, s'étendent depuis les paliers d'articulation fixes (34, 35) vers le haut et vers le véhicule (1) ou vers un côté véhicule de la poutre porteuse (2).
vers le côté du longeron (17).

15. Dispositif de support de marchandises (7) selon l'une des revendications précédentes, **caractérisé en ce que** deux modules de maintien (6) pour la réception commune d'une charge allongée (2) sont prévus, qui peuvent pivoter indépendamment l'un de l'autre.
